# EUROPÄISCHE PATENTSCHRIFT

(11) **EP 4 261 095 B1**
(45) Veröffentlichungstag und Bekanntmachung des Hinweises auf die Patenterteilung: **09.10.2024**
(21) Anmeldenummer: 23167188.4
(22) Anmeldetag: 07.04.2023
(51) Int. Cl.: B61B 11/00, B61B 12/00

(54) **SEILBAHN UND SEILBAHNVERBUND MIT MEHREREN SEILBAHNEN**
CABLEWAY AND CABLEWAY COMBINATION WITH SEVERAL CABLEWAYS
TÉLÉPHÉRIQUE ET TÉLÉPHÉRIQUE À PLUSIEURS TÉLÉPHÉRIQUES

(30) Priorität: 12.04.2022 AT 502382022
(43) Veröffentlichungstag der Anmeldung: 18.10.2023
(73) Patentinhaber: Innova Patent GmbH, 6922 Wolfurt (AT)
(72) Erfinder: Mohr, Clemens, 6922 Wolfurt (AT)
(74) Vertreter: Patentanwälte Pinter & Weiss OG

(56) Entgegenhaltungen:
- WO-A2-2011/003812
- CN-A- 105 774 822
- JP-A- 2010 221 822
- JP-A- 2015 224 013

## Beschreibung

Die Erfindung betrifft eine Seilbahn mit einer Anzahl von Seilbahnstationen und einer Anzahl von Seilbahnfahrzeugen, die mit einem Förderseil zwischen den Seilbahnstationen bewegbar sind, wobei eine Seilbahn-Steuerungseinheit zur Steuerung der Seilbahn vorgesehen ist. Die Erfindung betrifft zudem einen Seilbahnverbund, der eine Mehrzahl von Seilbahnen aufweist, die jeweils eine Anzahl von Seilbahnstationen und eine Anzahl von Seilbahnfahrzeugen aufweisen, die zwischen den Seilbahnstationen bewegbar sind. Weiters betrifft die Erfindung Verfahren zum Betreiben einer Seilbahn und eines Eine solche Seilbahn ist von der Druckschrift JP 2015 224013 A bekannt.

In Wintersportgebieten gibt es in der Regel mehrere Seilbahnen, die oftmals von einem Betreiber betrieben werden. Die einzelnen Seilbahnen werden dabei in der Regel unabhängig voneinander über eine in der jeweiligen Seilbahn vorgesehenen Seilbahn-Steuerungseinheit gesteuert. Die Steuerung erfolgt meist von einem Bedienraum der Seilbahn, der üblicherweise in einer Seilbahnstation vorgesehen ist. Die Seilbahnfahrzeuge der Seilbahnen werden dabei in der Regel mit einer für die jeweilige Seilbahn festgelegten und üblicherweise konstanten Fördergeschwindigkeit bewegt. Die Fördergeschwindigkeit hängt dabei von der Art der Seilbahn ab und variiert daher naturgemäß. Bei einer Umlaufseilbahn werden die Seilbahnfahrzeuge mittels eines Förderseils in einer umlaufenden Schleife zwischen zwei oder mehreren Seilbahnstationen bewegt.

Die Fördergeschwindigkeit auf der freien Strecke ist dabei durch die Geschwindigkeit des Förderseils festgelegt. Innerhalb einer Seilbahnstation können die Seilbahnfahrzeuge bei einer Umlaufseilbahn in der Regel vom Förderseil entkoppelt werden und mit verringerter Fördergeschwindigkeit durch die Seilbahnstation bewegt werden. Zur Bewegung der entkoppelten Seilbahnfahrzeuge ist in der Regel ein geeigneter Hilfsantrieb vorgesehen. Auch die Bewegung innerhalb der Seilbahnstation erfolgt üblicherweise mit einer festgelegten und in der Regel konstanten Fördergeschwindigkeit. Eine Änderung der Fördergeschwindigkeit ist im Allgemeinen nicht vorgesehen und erfolgt allenfalls aus Sicherheitsgründen. Beispielsweise wird die Fördergeschwindigkeit reduziert, wenn eine Person im Einstiegsbereich stürzt, wetterbedingt oder aus technischen Gründen. Die Reduktion der Fördergeschwindigkeit wird dabei meist manuell vom Bedienpersonal durchgeführt.

Bei Pendelbahnen werden die Seilbahnfahrzeuge nicht in einer umlaufenden Schleife bewegt, sondern in einer pendelnden Bewegung zwischen den Seilbahnstation hin- und herbewegt. Hierbei wird die Fördergeschwindigkeit naturgemäß verringert, wenn die Seilbahnfahrzeuge die Seilbahnstation erreichen und danach bis zum Stillstand reduziert. Auf der freien Strecke zwischen den Seilbahnstation erfolgt die Bewegung der Seilbahnfahrzeuge jedoch in der Regel mit einer festgelegten, konstanten Fördergeschwindigkeit.

Neben der Antriebseinrichtung zum Antrieb der Seilbahnfahrzeuge, gibt es in Seilbahnen üblicherweise eine Reihe von weiteren elektrischen Verbrauchern, die während des Betriebs mit Energie versorgt werden müssen. Auch hier gilt, dass sämtliche Verbraucher in der Regel mit einer konstanten elektrischen Leistung betrieben werden.

Es ist daher eine Aufgabe der Erfindung, eine Seilbahn und einen Seilbahnverbund bereitzustellen, die einen effizienteren Betrieb ermöglichen.

Die Aufgabe wird mit der eingangs genannten Seilbahn dadurch gelöst, dass ein Maximalwert für einen elektrischen Energieverbrauch der Seilbahn vorgegeben ist, vorzugsweise in Form einer Maximalleistung oder einer Maximalenergiemenge, dass eine Energie-Ermittlungseinheit zur Ermittlung einer, für den elektrischen Energieverbrauch der Seilbahn repräsentativen, Größe vorgesehen ist und dass die Seilbahn-Steuerungseinheit dazu ausgebildet ist, den elektrischen Energieverbrauch zumindest eines elektrischen Verbrauchers der Seilbahn in Abhängigkeit der ermittelten Größe so zu steuern oder zu regeln, dass der für die Seilbahn vorgegebene Maximalwert für den elektrischen Energieverbrauch nicht überschritten wird. Aus ökonomischen Gründen ist es generell wünschenswert, den Energieverbrauch der Seilbahnen eines Seilbahnverbunds möglichst gering zu halten, insbesondere vor dem Hintergrund steigender Energiekosten. Auch aus ökologischen Gründen ist es grundsätzlich wünschenswert, den Energieverbrauch möglichst gering zu halten, insbesondere, wenn die Energie nicht ausschließlich aus erneuerbaren Energieträgern stammt.

Dies wird bei der Erfindung durch die Vorgabe eines Maximalwertes und die entsprechende Steuerung des elektrischen Verbrauchers ermöglicht, wobei vorzugsweise natürlich eine Mehrzahl von Verbrauchern gesteuert werden. Bisher war dies nicht möglich und auch nicht gewünscht, denn die Seilbahnen waren bisher in aller Regel an das öffentliche Stromnetz angebunden und unterlagen keiner Beschränkung, was den Energieverbrauch betrifft. Die für einen elektrischen Energieverbrauch der Seilbahn repräsentative Größe kann dabei beispielsweise eine aktuelle elektrische Leistung sein, die für den Betrieb der Seilbahn aufgewendet wird. Die Ermittlungseinheit könnte dabei beispielsweise zumindest ein Strommessgerät zur Messung des elektrischen Stroms und zumindest ein Spannungsmessgerät zur Messung der elektrischen Spannung umfassen. Aus Strom und Spannung kann die Ermittlungseinheit die elektrische Leistung berechnen. Bei bekannter Spannung könnte grundsätzlich auch nur der Strom gemessen werden. Die Ermittlungseinheit könnte aber auch ein Leistungsmessgerät umfassen, mit dem die Leistung direkt gemessen werden kann. Die Ermittlungseinheit könnte aber beispielsweise auch einen Energiezähler aufweisen, mit dem der Energieverbrauch, beispielsweise in kWh, erfasst werden kann.

Die Seilbahn ist vorzugsweise an eine elektrische Energiequelle angeschlossen, durch die der Maximalwert festgelegt ist. Zusätzlich oder alternativ kann ein maximaler elektrischer Energieverbrauch der Seilbahn, z.B. eine Summe von elektrischen Nennleistungen der Anzahl von Verbrauchern, größer sein kann, als der vorgegebene Maximalwert. Dadurch kann die verfügbare Energiemenge oder Leistung begrenzt werden und die Seilbahn kann den Energieverbrauch an den begrenzte Energiemenge bzw. die eingeschränkte Leistung entsprechend anpassen. Beispielweise kann die Seilbahn-Steuerungseinheit die Leistung einzelner Verbraucher reduzieren, um zu gewährleisten, dass der Maximalwert nicht überschritten wird, was beispielsweise dann erforderlich ist, wenn der maximal mögliche Energieverbrauch der Seilbahn den vorgegebenen Maximalwert übersteigen würde. Wenn als Maximalwert z.B. eine maximale Energiemenge vorgegeben ist, dann kann die Seilbahn-Steuerungseinheit den Energieverbrauch auch vorausschauend so planen, dass der Maximalwert nicht überschritten wird, z.B. indem einzelne Verbraucher abgeschaltet werden oder die Leistung entsprechend reduziert wird.

Vorzugsweise umfasst der zumindest eine elektrische Verbraucher einen der folgenden Verbraucher: eine Antriebseinrichtung zum Antrieb der Seilbahnfahrzeuge, eine Heizeinrichtung zum Heizen der Seilbahnfahrzeuge, eine Klimatisierungseinrichtung, eine Beleuchtung, ein Förderband zum Fördern von Personen, eine Tür-Betätigungseinrichtung zum Öffnen/Schließen von Kabinentüren von Seilbahnfahrzeugen. Dadurch können die wesentlichsten Verbraucher einer Seilbahn bei der Steuerung des Energieverbrauchs berücksichtigt werden. Beispielsweise kann die Seilbahn-Steuerungseinheit zur Steuerung des Energieverbrauchs eine Antriebsleistung der Antriebseinrichtung, vorzugsweise durch Änderung einer Fördergeschwindigkeit der Seilbahnfahrzeuge, verändern und/oder eine Heizleistung der Heizeinrichtung verändern und/oder eine Soll-Temperatur der Klimatisierungseinrichtung verändern und/oder eine Antriebsleistung der des Förderbandes, vorzugsweise durch Änderung einer Förderbandgeschwindigkeit, verändern und/oder eine Häufigkeit einer Aktivierung der Tür-Betätigungseinrichtung verändern. Wenn beispielsweise festgestellt wird, dass die ermittelte Größe des aktuellen Energieverbrauchs, beispielsweise eine elektrische Leistung, den vorgegebenen Maximalwert überschreitet, dann kann z.B. die Fördergeschwindigkeit der Seilbahnfahrzeuge reduziert werden, sodass der Maximalwert nicht mehr überschritten wird.

Für eine Mehrzahl von elektrischen Verbrauchern kann jeweils ein Priorisierungswert festgelegt sein und die Seilbahn-Steuerungseinheit kann die Priorisierungswerte bei der Steuerung der Mehrzahl von elektrischen Verbrauchern berücksichtigen. Dadurch ist es möglich, die Wichtigkeit einzelner Verbraucher zu berücksichtigen. Der Energieverbrauch von Verbrauchern, die für den Seilbahnbetrieb weniger wichtig sind, beispielsweise die Sitzheizung einer Sesselbahn, kann dann ggf. früher reduziert werden, als der Energieverbrauch von Verbrauchern, die für den Seilbahnbetrieb wichtiger sind, z.B. der Antriebseinrichtung der Seilbahn.

Vorzugsweise ist in zumindest einer Seilbahnstation der Seilbahn eine Personendetektionseinrichtung vorgesehen, die dazu ausgebildet ist, während des Betriebs der Seilbahn, vorzugsweise kontinuierlich oder intermittierend, eine, für eine Menschenmenge in einem Zutrittsbereich der jeweiligen Seilbahnstation repräsentative, Kenngröße zu ermitteln. Die Seilbahn-Steuerungseinheit ist dazu ausgebildet, den elektrischen Energieverbrauch des zumindest einen Verbrauchers in Abhängigkeit der zu einem festgelegten Zeitpunkt oder in einem festgelegten Zeitraum während des Betriebs ermittelten Kenngröße oder einer daraus abgeleiteten Größe zu steuern. Dadurch ist es möglich, dass die Auslastung der Seilbahn automatisch bei der Steuerung des Energieverbrauchs berücksichtigt wird. Wenn beispielsweise eine Kenngröße ermittelt wird, die für eine geringe Personenanzahl repräsentativ ist, dann kann die Seilbahn-Steuerungseinheit reagieren und den Energieverbrauch reduzieren. Eine Möglichkeit hierfür wäre z.B. eine Reduktion der Fördergeschwindigkeit, da im Fall einer geringen Auslastung nicht die maximale Förderkapazität der Seilbahn nötig ist. Die Verarbeitung der Kenngröße kann beispielsweise in Echtzeit erfolgen, sodass die jeweils aktuelle Menschenmenge bei der Steuerung berücksichtigt wird.

Wenn aufgrund er ermittelten Kenngröße erkannt wird, dass sich keine Personen mehr im Zutrittsbereich befinden, dann könnte die Antriebseinrichtung z.B. auch (zumindest temporär) ganz gestoppt werden. Bei einer Sesselbahn könnte z.B. auch ein allfällig vorhandenes Förderband gestoppt werden. Bei einer Kabinenbahn könnte auch eine fernbedienbare Tür-Betätigungseinrichtung vorgesehen sein, mit der die Kabinentüren der Kabinen innerhalb einer Seilbahnstation selektiv geöffnet und geschlossen werden können. Hierbei könnte dann beispielsweise ein Öffnen der Türen unterlassen werden, wenn keine Personen detektiert worden sind. Die Erfassung der Kenngröße kann beispielsweise kontinuierlich erfolgen und es könnte ein Mittelwert über einen gewissen festgelegten Zeitraum ermittelt und zur Steuerung verwendet werden. Die Ermittlung der Kenngröße könnte auch intermittierend, d.h. zeitdiskret in bestimmten zeitlichen Abständen erfolgen, wobei die jeweils ermittelte Kenngröße unmittelbar zur Steuerung verwendet werden kann. Auch eine aus der Kenngröße abgeleitete Größe, z.B. eine zeitliche Änderung der Kenngröße oder der genannte Mittelwert, könnte zur Steuerung verwendet werden.

An dieser Stelle sei angemerkt, dass die Verwendung der Personendetektionseinrichtung nicht zwingend mit der Vorgabe des Maximalwertes einhergehen muss. Die Steuerung der Seilbahn anhand der durch die Personendetektionseinrichtung ermittelten Kenngröße kann grundsätzlich auch für sich genommen vorgesehen sein, d.h. ohne Einschränkung durch einen vorgegebenen Maximalwert.

Beispielsweise kann zumindest ein Schwellenwert vorgegeben sein und die Seilbahn-Steuerungseinheit kann den elektrischen Energieverbrauch des zumindest einen elektrischen Verbrauchers reduzieren, wenn die ermittelte Kenngröße oder die daraus abgeleitete Größe den vorgegebene Schwellenwert unterschreitet. Die Seilbahn-Steuerungseinheit kann den elektrischen Energieverbrauch wieder erhöhen, wenn die ermittelte Kenngröße oder die daraus abgeleitete Größe den vorgegebenen Schwellenwert wieder erreicht oder überschreitet. Natürlich können auch mehrere Schwellenwerte vorgegeben sein und das Reduzieren bzw. Erhöhen des elektrischen Energieverbrauchs kann stufenförmig erfolgen. Dies ist insbesondere bei elektrischen Verbrauchern vorteilhaft, deren elektrischer Verbrauch von der Anzahl der beförderten Passagiere abhängig ist, wie z.B. der Antriebseinrichtung.

Es kann auch vorteilhaft sein, wenn für den zumindest einen elektrischen Verbraucher eine Funktion zur Ermittlung eines Sollwerts einer, für den elektrischen Energieverbrauch repräsentativen, Größe in Abhängigkeit der Kenngröße oder der daraus abgeleiteten Größe vorgegeben ist und dass die Seilbahn-Steuerungseinheit anhand der von der Personendetektionseinrichtung ermittelten Kenngröße oder der daraus abgeleiteten Größe mittels der Funktion einen Sollwert der, für den elektrischen Energieverbrauch repräsentativen, Größe ermittelt und den zumindest einen elektrischen Verbraucher anhand des ermittelten Sollwerts steuert. Die Funktion kann beispielsweise in der Seilbahn-Steuerungseinheit hinterlegt sein, beispielsweise als Kennlinie oder Kennfeld. Es können auch mehrere Funktionen für mehrere elektrische Verbraucher vorgegeben sein, z.B. um verschiedene Abhängigkeiten von der Kenngröße zu berücksichtigen. Dadurch kann die elektrische Leistung einzelner Verbraucher beispielsweise bei verschiedenen Werten der Kenngröße verändert, insbesondere reduziert, werden.

Es kann auch eine Regelungseinheit vorgesehen sein, die dazu ausgebildet ist, aus dem ermittelten Sollwert und einem für den zumindest einen Verbraucher ermittelten Istwert eine Stellgröße zu ermitteln und den zumindest einen Verbraucher mit der Stellgröße anzusteuern. Dadurch kann der zumindest eine Verbraucher auf dien ermittelten Sollwert geregelt werden. Zur Ermittlung des Istwerts kann beispielsweise eine separate Messeinheit vorgesehen sein, mit der eine geeignete elektrische Größe des Verbrauchers erfasst werden kann, z.B. elektrischer Strom oder elektrische Leistung.

Vorzugsweise weist die Personendetektionseinrichtung zumindest eine Sensoreinheit zur Erfassung einer Sensorgröße im Zutrittsbereich und eine Auswerteeinheit auf, die dazu ausgebildet ist, aus der Sensorgröße die Kenngröße zu ermitteln. Die Auswerteeinheit kann dabei auch in der Sensoreinheit integriert sein oder in der Seilbahn-Steuerungseinheit integriert sein. Besonders bevorzugt weist die Sensoreinheit eine Kamera, beispielswiese eine 3D-Kamera oder Wärmebildkamera, oder zumindest eine Lichtschranke oder ein Mikrofon oder ein WLAN-Netzwerk oder eine RFID-Antenne oder zumindest einen der folgenden Sensoren auf: Drucksensor, Waage, Bewegungssensor. Zumindest einer der genannten Sensoren weist vorzugsweise einen Piezosensor, Ultraschallsensor, Infrarotsensor, CO2-Sensor oder Kontaktschalter auf. Dadurch werden verschiedene Möglichkeiten geschaffen, wie die Kenngröße ermittelt werden kann. Die Sensoreinheit kann beispielsweise die Sensorgröße kontinuierlich erfassen und die Auswerteeinheit kann die erfasste Sensorgröße zur Ermittlung der Kenngröße in kontinuierlich oder in diskreten Zeitschritten abtasten.

Der Zutrittsbereich kann auch einen Einstiegsbereich für Personen zum Einsteigen in die Seilbahnfahrzeuge und einen Wartebereich zum Anstellen für Personen aufweisen, wobei der Einstiegsbereich und der Wartebereich durch eine Fahrkarten-Kontrollschranke getrennt sein können. Die Personendetektionseinrichtung kann in diesem Fall dazu ausgebildet sein, die Kenngröße im Einstiegsbereich und/oder im Wartebereich zu ermitteln. Dadurch kann berücksichtigt werden, dass es bei verschiedenen Seilbahntypen an unterschiedlichen Stellen zu Menschenansammlungen kommen kann. Während es bei hoher Auslastung Kabinenbahnen in der Regel unmittelbar im Einstiegsbereich zu Menschenansammlungen kommt, ist dies bei Sesselbahnen oftmals vor der Zutritts-Kontrollschranke der Fall oder zwischen Zutritts-Kontrollschranke und automatischen Zugangsschranken, die in der Regel kurz vor dem Einstiegsbereich vorgesehen sind.

Die für die Menschenmenge im Zutrittsbereich repräsentative Kenngröße ist vorzugsweise eine der folgenden Größen: Personenanzahl, Lautstärke, Fläche der Menschenmenge, Druck, Gewicht, CO2-Konzentration, Anzahl von Sensorsignale. Die aus der Kenngröße abgeleitete Größe kann ein zeitlicher Mittelwert der Kenngröße über einen festgelegten Zeitraum sein oder eine zeitliche Änderung der Kenngröße. Die Art der Kenngröße hängt dabei stark von den verwendeten Sensoren der Personendetektionseinrichtung ab.

Die Aufgabe wird weiters mit dem eingangs genannten Seilbahnverbund dadurch gelöst, dass eine Seilbahnverbund-Steuerungseinheit zur Steuerung des Seilbahnverbunds vorgesehen ist, dass ein Maximalwert für einen elektrischen Gesamtenergieverbrauch des Seilbahnverbunds vorgegeben ist, vorzugsweise in Form einer Maximalleistung oder Maximalenergiemenge, dass eine Gesamtenergie-Ermittlungseinheit zur Ermittlung einer, für einen elektrischen Gesamtenergieverbrauch des Seilbahnverbunds repräsentativen, Größe vorgesehen ist, und dass die Seilbahnverbund-Steuerungseinheit dazu ausgebildet ist, den elektrischen Energieverbrauch zumindest einer Seilbahn des Seilbahnverbunds in Abhängigkeit der ermittelten Größe so zu steuern, dass der vorgegebene Maximalwert für den elektrischen Gesamtenergieverbrauch des Seilbahnverbunds nicht überschritten wird. Dadurch kann auch bei einem Seilbahnverbund ein effizienterer Betrieb erreicht werden, indem die Energieverbräuche der einzelnen Seilbahnen, insbesondere der darin vorgesehenen elektrischen Verbraucher, in Abhängigkeit des vorgegebenen Maximalwertes gesteuert werden. Vorzugsweise ist die zumindest eine Seilbahn nach einem der Ansprüche 1 bis 13 ausgebildet ist und die Seilbahnverbund-Steuerungseinheit ermittelt aus dem vorgegebenen Maximalwert für den elektrischen Gesamtenergieverbrauch des Seilbahnverbunds den Maximalwert für den elektrischen Energieverbrauch der einzelnen Seilbahnen und übermittelt diese als Vorgabe an die Seilbahn-Steuerungseinheiten der Seilbahnen. Besonders bevorzugt sind natürlich alle Seilbahnen des Seilbahnverbunds nach einem der Ansprüche 1 bis 13 ausgebildet.

Die Seilbahnen des Seilbahnverbunds können an eine gemeinsame elektrische Energiequelle angeschlossen sein, durch die der vorgegebene Maximalwert für den elektrischen Gesamtenergieverbrauch des Seilbahnverbunds festgelegt ist. Alternativ oder zusätzlich kann auch eine Summe der maximalen elektrischen Energieverbräuche der Seilbahnen, z.B. die Summe der Nennleistungen der elektrischen Verbraucher der Seilbahnen, größer sein als der für den Seilbahnverbund vorgegebene Maximalwert für den elektrischen Gesamtenergieverbrauch. Dadurch kann im Wesentlichen eine optimale Lastverteilung durchgeführt werden. Das kann z.B. bedeuten, dass nicht alle Seilbahnen mit ihrer Nennleistung betrieben werden können, weil dies den vorgegebenen Maximalwert übersteigen würde. Die Seilbahnverbund-Steuerungseinheit kann jedoch die Leistung der Verbraucher der Mehrzahl der Seilbahnen entsprechend reduzieren, dass der Maximalwert nicht überschritten wird.

Es kann für eine Mehrzahl von Seilbahnen des Seilbahnverbunds beispielsweise auch jeweils ein Priorisierungswert vorgegeben sein und die Seilbahnverbund-Steuerungseinheit kann die Priorisierungswerte bei der Steuerung des elektrischen Energieverbrauchs der Seilbahnen berücksichtigen. Dadurch kann beispielsweise der Energieverbrauch einer Seilbahn, die für den Betrieb des gesamten Seilbahnverbunds eine geringere Wichtigkeit hat, z.B. eine relativ abgelegen angeordnete Seilbahnen mit meist weniger Passagieraufkommen, früher reduziert werden, als der Energieverbrauch einer Seilbahn, die einen höheren Stellenwert im Seilbahnverbund hat.

Die Aufgabe wird weiters durch ein Verfahren zum Betreiben einer Seilbahn gemäß Anspruch 18 gelöst, sowie durch ein Verfahren zum Betreiben eines Seilbahnverbunds gemäß Anspruch 20.

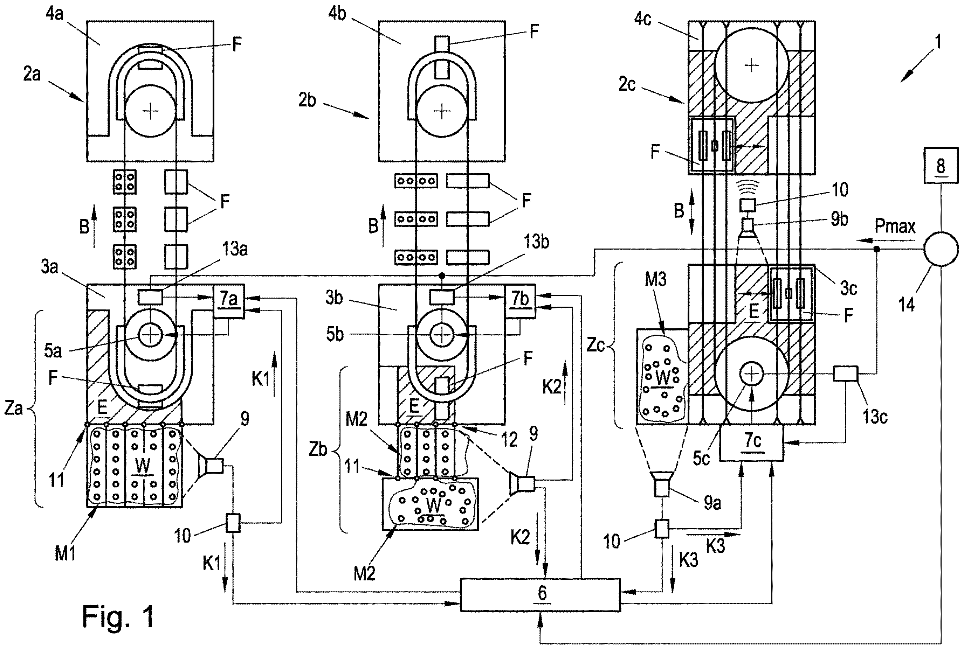

Die gegenständliche Erfindung wird nachfolgend unter Bezugnahme auf Figur 1 näher erläutert, die beispielhaft, schematisch und nicht einschränkend eine vorteilhafte Ausgestaltung der Erfindung zeig. Dabei zeigt
Fig.1 einen Seilbahnverbund mit drei Seilbahnen.

In Fig.1 ist ein Seilbahnverbund 1 mit drei Seilbahnen 2a-2c schematisch dargestellt. Jede Seilbahn 2a-2c weist beispielhaft eine erste Seilbahnstation 3a-3c und eine zweite Seilbahnstation 4a-4c auf. Die Seilbahnen 2a-2c weisen jeweils eine Anzahl von Seilbahnfahrzeugen F auf, die mit einem Förderseil zwischen der ersten Seilbahnstation 3a-3c und der zweiten Seilbahnstation 4a-4c bewegbar sind. Die ersten Seilbahnstationen 3a-3c können beispielsweise Talstationen in einem Skigebiet und die zweiten Seilbahnstationen 4a-4c Bergstationen sein. Die Beförderung von Passagieren erfolgt somit hauptsächlich (jedoch nicht ausschließlich) von der Talstation 3a-3c zur Bergstation 4a-4c. Die Seilbahnen 2a-2c sind hier beispielhaft unterschiedlich ausgebildet, könnten aber natürlich auch gleichartig sein.

Die erste Seilbahn 2a ist beispielhaft als Umlaufseilbahn in Form einer Kabinenbahn ausgeführt, wobei die Seilbahnfahrzeuge Kabinen zur Aufnahme einer Anzahl von Personen aufweisen. Die zweite Seilbahn 2b ist beispielhaft als Umlaufseilbahn in Form einer Sesselbahn ausgeführt, wobei die Seilbahnfahrzeuge F Sessel zur Aufnahme einer Anzahl von Personen aufweisen. Die dritte Seilbahn 2c ist beispielhaft als Pendelbahn ausgeführt, wobei die Seilbahnfahrzeuge ebenfalls Kabinen zur Aufnahme einer Anzahl von Personen aufweisen. Die Kapazität der Kabinen einer Pendelbahn ist in der Regel deutlich höher, als die Kapazität der Kabinen einer Umlaufseilbahn und die Kapazität der Kabinen Umlaufseilbahn ist in der Regel deutlich höher, als die Kapazität der Sessel einer Sesselbahn. Bei einer Umlaufseilbahn werden in der Regel eine Vielzahl von Seilbahnfahrzeugen F in einer kontinuierlich umlaufenden Bewegungsrichtung B bewegt, wie durch die Pfeile der Seilbahnen 2a, 2b angedeutet ist, der nur in eine Richtung zeigt. Bei einer Pendelbahn sind üblicherweise lediglich zwei Seilbahnfahrzeuge F vorgesehen (ein Seilbahnfahrzeug je Richtung) und die Seilbahnfahrzeuge F werden in einer pendelnden Bewegungsrichtung B zwischen den Seilbahnstationen 3c, 4c hin- und her bewegt, wie durch den Pfeil in der dritten Seilbahn 2c angedeutet ist, der in entgegengesetzte Richtungen zeigt.

Jede Seilbahn 2a-2c weist auch eine Anzahl von elektrischen Verbrauchern auf, beispielsweise jeweils zumindest eine Antriebseinrichtung 5a-5c zum Antrieb der Seilbahnfahrzeuge F. Jede Seilbahn 2a-2c weist zudem eine Seilbahn-Steuerungseinheit 7a-7c zur Steuerung der elektrischen Verbraucher auf. Die Seilbahn-Steuerungseinheiten 7a-7c weisen jeweils eine geeignete Hardware und/oder Software auf und sind über geeignete Kommunikationsverbindungen mit den elektrischen Verbrauchern verbunden. Die Antriebseinrichtungen 5a-5c können z.B. jeweils eine elektrische Maschine zum Antrieb einer Seilscheibe aufweisen, um die das Förderseil geschlungen ist. Bei Umlaufbahnen, hier die Seilbahnen 2a+2b, können die Seilbahnfahrzeuge F in der Regel in den Seilbahnstationen 3a+3b, 4a+4b vom Förderseil entkoppelt werden und mittels eines (nicht dargestellten) Hilfsantriebs mit verringerter Geschwindigkeit durch die jeweilige Seilbahnstation 3a+3b, 4a+4b bewegt werden. Die Antriebseinrichtungen 5a+5b können in diesem Fall auch zum Antrieb der Hilfsantriebe ausgebildet sein.

Neben der Antriebseinrichtung 5a-5c können eine Reihe von weiteren elektrischen Verbrauchern vorgesehen sein, auf deren Darstellung jedoch aus Gründen der besseren Übersichtlichkeit verzichtet wurde. Zu den elektrischen Verbrauchern zählen neben der den Antriebseinrichtungen 5a-5c, die einen Großteil der Energie verbrauchen, beispielsweise auch eine Heizeinrichtung zum Heizen der Seilbahnfahrzeuge F, z.B. eine Sitzheizung bei der Sesselbahn 2b, oder eine Klimatisierungseinrichtung zur Temperaturregelung (Heizung und/oder Kühlung) von Innenräumen der Seilbahnstationen 3a-3c bzw. 4a-4c. Weitere elektrische Verbraucher sind beispielsweise eine Beleuchtung innerhalb oder außerhalb der Seilbahnstationen 3a-3c bzw. 4a-4c, ein Förderband zum Fördern von Personen im Einstiegsbereich E einer Seilbahnstationen 3b der Sesselbahn 2b oder eine fernbedienbare Tür-Betätigungseinrichtung zum Öffnen/Schließen von Kabinentüren von Seilbahnfahrzeugen F.

Ein erster Aspekt der Erfindung betrifft eine Seilbahn und wird nachfolgend stellvertretend anhand der ersten Seilbahn 2a näher beschrieben. Wo es zweckdienlich ist, wird auch auf die zweite Seilbahn 2b sowie die dritte Seilbahn 2c Bezug genommen. Natürlich können auch die Seilbahnen 2b+2c erfindungsgemäß ausgebildet sein. Danach wird ein zweiter Aspekt der Erfindung anhand des gesamten Seilbahnverbunds 1 näher beschrieben.

In der ersten Seilbahn 2a ist eine Energie-Ermittlungseinheit 13a zur Ermittlung einer, für einen elektrischen Energieverbrauch der Seilbahn 2a repräsentativen, Größe vorgesehen.

Die Energie-Ermittlungseinheit 13a kann beispielsweise in einer elektrischen Versorgungsleitung angeordnet sein, über welche die gesamte Seilbahnen 2a mit elektrischer Energie versorgt wird. Die Energie-Ermittlungseinheit 13a könnte aber prinzipiell auch dazu ausgebildet sein, nur den Energieverbrauch der Antriebseinrichtung 5a zu erfassen, was unter Umständen ausreichend sein kann, wenn die Antriebseinrichtung 5a für den gesamten Energieverbrauch der Seilbahn 2a maßgeblich ist. Die Seilbahn 2a ist an eine Energiequelle 8 angeschlossen, beispielsweise an das öffentliche Stromnetz oder eine separate, z.B. autarke, Energiequelle. Natürlich kann die Seilbahn 2a auch gemeinsam mit weiteren Seilbahnen 2b+2c an eine gemeinsame Energiequelle 8 angeschlossen sein, wie in Fig.1 dargestellt ist.

Im Rahmen der Erfindung ist für den elektrischen Energieverbrauch der Seilbahn 2a ein Maximalwert vorgegeben und die Seilbahn-Steuerungseinheiten 7a ist dazu ausgebildet, den elektrischen Energieverbrauch des zumindest einen elektrischen Verbrauchers, vorzugsweise mehrerer Verbraucher, der Seilbahn 2a in Abhängigkeit der von der Energie-Ermittlungseinheit 13a ermittelten Größe so zu steuern, dass der für die Seilbahn 2a vorgegebene Maximalwert nicht überschritten wird. Die Energie-Ermittlungseinheit 13a ist hier beispielhaft in der Versorgungsleitung der Antriebseinrichtung 5a angeordnet und mit der Seilbahn-Steuerungseinheit 7a verbunden, um die ermittelte Größe an die Seilbahn-Steuerungseinheit 7a zu übermitteln, was durch den Pfeil angedeutet ist. Natürlich ist diese Anordnung nur beispielhaft und hängt im Wesentlichen von der Art der verwendeten Energie-Ermittlungseinheit 13a ab.

Die Energie-Ermittlungseinheit 13a kann beispielsweise eine Strommesseinheit zur Messung des elektrischen Stroms aufweisen und die ermittelte, für den Energieverbrauch repräsentative, Größe kann beispielsweise der aktuelle Strom sein. Die ermittelte, für den Energieverbrauch repräsentative, Größe könnte aber beispielsweise auch eine aktuelle elektrische Leistung sein. Diese kann von der Energie-Ermittlungseinheit 13a aus dem gemessenen Strom und der elektrischen Spannung ermittelt werden. Die elektrische Spannung kann entweder bekannt sein oder könnte z.B. ebenfalls erfasst werden, z.B. mittels einer nicht dargestellten Spannungsmesseinheit. Die Energie-Ermittlungseinheit 13a könnte aber auch eine Leistungsmesseinheit zur direkten Messung der elektrischen Leistung aufweisen. Als Maximalwert könnte beispielsweise eine maximale elektrische Leistung vorgegeben sein und die Seilbahn-Steuerungseinheit 7a kann die elektrischen Verbraucher (z.B. die Antriebseinheit 5a) in Abhängigkeit der ermittelten aktuellen elektrischen Leistung so steuern, dass der Maximalwert nicht überschritten wird. Beispielsweise könnte die Leistung einzelner elektrischer Verbraucher der Seilbahn 2a reduziert werden, um den Maximalwert einzuhalten.

Wie eingangs angemerkt, könnte die Energie-Ermittlungseinheit 13a aber auch einen Energiezähler aufweisen, mit dem der Energieverbrauch innerhalb einer festgelegten Zeiteinheit, z.B. seit Betriebsbeginn, direkt gemessen werden kann, beispielsweise in kWh. Als Maximalwert könnte beispielsweise eine maximale Energiemenge vorgegeben sein, z.B. eine festgelegte Energiemenge pro Tag oder Woche.

In der Seilbahn 2a kann beispielsweise auch eine geeignete Regelungseinheit vorgesehen sein, die einen oder mehrere Regler aufweisen kann. Mittels der Regelungseinheit kann aus dem für die Seilbahn 2a vorgegebenen Maximalwert, z.B. einer maximalen Leistung, und der von der Energie-Ermittlungseinheit 13a ermittelten Größe, beispielsweise einer aktuellen Leistung, eine Stellgröße zur Ansteuerung des oder der elektrischen Verbraucher/s ermittelt werden. In der Seilbahn-Steuerungseinheit 7a können aber beispielsweise auch verschiedene Betriebsmodi implementiert sein, die jeweils einem bestimmten Energieverbrauch zugeordnet sind. In den Betriebsmodi können beispielswese verschiedene Leistungen einzelner Verbraucher festgelegt sein oder ggf. auch zeitliche Verläufe von elektrischen Leistungen. Es können auch verschiedene Betriebsmodi für verschiedene maximale Energiemengen festgelegt sein, die gewährleisten, dass die jeweils vorgegebene maximale Energiemenge nicht überschritten wird.

Es kann beispielsweise auch für eine Mehrzahl von bestimmten elektrischen Verbrauchern jeweils ein Priorisierungswert festgelegt sein und die Seilbahn-Steuerungseinheit 7a kann die Priorisierungswerte bei der Steuerung der Mehrzahl von elektrischen Verbrauchern berücksichtigen. Über die Vergabe von Priorisierungswerten kann z.B. festgelegt werden, wie wichtig der Betrieb eines bestimmten Verbrauchers für die Aufrechterhaltung des Betriebs der Seilbahn 2a ist. Ein hoher Priorisierungswert kann bedeuten, dass der zugeordnete Verbraucher eine relativ hohe Wichtigkeit hat, sodass dessen Leistung vorzugsweise nicht, nur gering oder eher spät reduziert wird. Ein Beispiel für einen elektrischen Verbraucher mit hohem Priorisierungswert könnte die Antriebseinrichtung 5a sein. Ein niedriger Priorisierungswert kann hingegen bedeuten, dass der zugeordnete Verbraucher eine relativ geringe Wichtigkeit hat, sodass dessen Leistung eher früh und ggf. bis auf null reduziert werden kann, ohne dass dies den Betrieb der Seilbahn 2a maßgebend beeinflusst. Ein Beispiel für einen elektrischen Verbraucher mit niedrigem Priorisierungswert könnte z.B. die Sitzheizung der Sesselfahrzeuge F einer Sesselbahn sein. Priorisierungswerte könnten beispielsweise zwischen null und zehn vergeben werden, wobei null bedeuten könnte, dass eine vollständige Abschaltung auch während des Betriebs zulässig ist und zehn bedeuten könnte, dass eine Reduktion der Leistung des zugeordneten Verbrauchers unzulässig ist.

Wie bereits erwähnt, ist die Seilbahn 2a an eine elektrische Energiequelle 8 angeschlossen. Der vorgegebene Maximalwert könnte nun beispielsweise auch durch die Energiequelle 8 selbst festgelegt sein. Das kann z.B. bedeuten, dass die Energiequelle 8 nur eine begrenzte maximale elektrische Leistung Pmax zur Verfügung stellen kann oder dass die verfügbare Energiemenge der Energiequelle 8 begrenzt ist. Die Seilbahn-Steuerungseinheit 7a kann die elektrischen Verbraucher der Seilbahn 2a folglich so steuern, dass die maximale Leistung Pmax oder die maximale Energiemenge der Energiequelle 8 nicht überschritten wird.

Ein maximaler elektrischer Energieverbrauch der Seilbahn 2a kann auch größer sein, als der vorgegebene Maximalwert. Beispielsweise könnte eine Summe der Nennleistungen der elektrischen Verbraucher größer sein, als die maximale verfügbare Leistung Pmax der Energiequelle 8. In diesem Fall können nicht alle Verbraucher der Seilbahn 2a mit der maximalen Nennleistung betrieben werden. Die Seilbahn-Steuerungseinheit 7a steuert die Verbraucher der Seilbahn 2a entsprechend so, dass die Leistung einzelner oder aller Verbraucher reduziert wird, um den Maximalwert nicht zu überschreiten. Die Auswahl des oder der Verbraucher, dessen/deren Leistung überhaupt oder zuerst reduziert wird, kann dabei durch die Betriebsmodi und die Priorisierungswerte festgelegt sein.

Zur Steuerung des Energieverbrauchs kann die Seilbahn-Steuerungseinheit 7a z.B. eine Antriebsleistung der Antriebseinrichtung 5a verändern, was vorzugsweise durch eine Änderung, insbesondere Reduktion, einer Fördergeschwindigkeit der Seilbahnfahrzeuge F erfolgen kann. Weiters könnte beispielsweise eine Heizleistung der Heizeinrichtung, z.B. der Sitzheizung der Sesselfahrzeuge, verändert werden und/oder es könnte eine Soll-Temperatur der Klimatisierungseinrichtung verändert werden. Auch eine Antriebsleistung des Förderbandes könnte verändert werden, vorzugsweise durch Änderung einer Förderbandgeschwindigkeit. Wenn eine fernbedienbare Tür-Betätigungseinrichtung vorgesehen ist, dann könnte zudem beispielsweise eine Häufigkeit der Aktivierung verändert werden. Insbesondere könnten die Türen der Seilbahnfahrzeuge teilweise geschlossen bleiben, was vorzugsweise bei Verwendung der nachfolgend näher erläuterten Personendetektionseinrichtung erfolgt.

In zumindest einer Seilbahnstation 3a der Seilbahn 2a (in Fig.1 z.B. in der Talstation) ist vorzugsweise eine Personendetektionseinrichtung vorgesehen, die dazu ausgebildet ist, während des Betriebs der Seilbahn 2a, vorzugsweise kontinuierlich oder intermittierend, eine, für eine Menschenmenge M1 in einem Zutrittsbereich Za der Seilbahnstation 3a repräsentative, Kenngröße K1 zu ermitteln. Die Seilbahn-Steuerungseinheit 7a kann den elektrischen Energieverbrauch der Verbraucher der Seilbahn 2a in Abhängigkeit ermittelten Kenngröße K1 oder eine daraus abgeleitete Größe steuern, die zu einem festgelegten Zeitpunkt oder in einem festgelegten Zeitraum während des Betriebs ermittelt wurde. Dadurch kann eine aktuelle Auslastung der Seilbahn 2a bei der Steuerung der elektrischen Verbraucher berücksichtigt werden. Beispielsweise kann durch eine Verringerung der Fördergeschwindigkeit der Seilbahnfahrzeuge F die erforderliche Antriebsleistung der Antriebseinrichtung 5a verringert werden, was zu einem geringeren Energieverbrauch führt. Dasselbe gilt natürlich auch für die anderen elektrischen Verbraucher, deren Leistung in Abhängigkeit der ermittelten Kenngrößen K1 reduziert werden kann. Elektrische Verbraucher, die für den Betrieb nicht unbedingt nötig sind, könnten beispielswiese auch (zumindest temporär) vollständig abgeschaltet werden.

Die Kenngröße K1 kann während des Betriebs der Seilbahn 2a beispielsweise kontinuierlich, also dauerhaft, ermittelt werden und die Verarbeitung der Kenngröße K1 und Steuerung der elektrischen Verbraucher kann durch die Seilbahn-Steuerungseinheit 7a ebenfalls kontinuierlich, z.B. in Echtzeit, erfolgen. Die Ermittlung der Kenngröße K1 und/oder die Steuerung der Verbraucher durch die Seilbahn-Steuerungseinheit 7a könnten aber auch intermittierend, d.h. zu nur zu bestimmten Zeitpunkten bzw. zeitdiskret, während des Betriebs erfolgen. Beispielsweise könnte die Kenngröße K1 kontinuierlich ermittelt werden und die Seilbahn-Steuerungseinheit 7a kann die zu festgelegten Zeitpunkten ermittelten Kenngröße K1 zur Steuerung der Verbraucher verwenden. Aber auch die Kenngröße K1 könnte nur in bestimmten festgelegten zeitlichen Abständen ermittelt werden und der jeweils ermittelte Wert von der Seilbahn-Steuerungseinheit 7a zur Steuerung der Verbraucher verwendet werden. Wie bereits erwähnt, kann die Kenngröße K1 von der Seilbahn-Steuerungseinheit 7a direkt zur Steuerung der Verbraucher verwendet werden. Alternativ könnte auch eine aus der Kenngröße K1 abgeleitete Größe zur Steuerung verwendet werden, beispielsweise ein Mittelwert der Kenngröße K1 über einen festgelegten Zeitraum oder eine zeitliche Änderung der Kenngröße K1.

Unter dem Zutrittsbereich Za ist im Rahmen der Anmeldung der gesamte Bereich zu verstehen, in dem sich die Passagiere der Seilbahn 2a vom Betreten der Seilbahnstation 3a bis zum Einstieg in die Seilbahnfahrzeuge F befinden können. Der Zutrittsbereich Za kann beispielsweise einen Einstiegsbereich E für Personen zum Einsteigen in die Seilbahnfahrzeuge F aufweisen und einen Wartebereich W zum Anstellen für Personen, wobei der Einstiegsbereich E und der Wartebereich W durch eine Fahrkarten-Kontrollschranke 11 getrennt sein können. Bei der Sesselbahn 2b kann im Wartebereich W nach der Fahrkarten-Kontrollschranke 11 zusätzlich auch noch eine automatische Schrankeneinrichtung 12 vorgesehen sein, die unmittelbar vor dem Einstiegsbereich E angeordnet ist und die dazu dient, den Zugang für Passagiere zum Einstiegsbereich zu festgelegten Zeitpunkten freizugeben und zu versperren.

Die Personendetektionseinrichtung kann dazu ausgebildet sein, die Kenngröße K1 im Einstiegsbereich E und/oder im Wartebereich Wzu ermitteln. Bei der Sesselbahn 2b kann es vorteilhaft sein, wenn die Kenngröße K2 im Wartebereich W ermittelt wird, weil sich im Einstiegsbereich E in der Regel nur eine geringere Anzahl von Personen aufhalten, die maximal der Anzahl an verfügbaren Sitzplätzen der Sessel entspricht. Bei der (Umlauf-) Kabinenbahn 2a, bei der sich Menschenansammlungen in der Regel sowohl im Wartebereich W (z.B. wie in Fig.1 angedeutet vor der Fahrkarten-Kontrollschranke 11), als auch im Einstiegsbereich E (nach der Fahrkarten-Kontrollschranke 11 und unmittelbar am Bahnsteig) bilden können, kann eine Ermittlung der Kenngröße K2 beispielsweise nur im Wartebereich W oder nur im Einstiegsbereich E erfolgen. Auch eine Ermittlung für beide Bereiche wäre aber denkbar. Bei der Pendelbahn 2c kann eine Ermittlung der Kenngröße K3 im Wartebereich W vorteilhaft sein, weil der Einstiegsbereich E oftmals zugleich als Ausstiegsbereich dient und eine Trennung von einsteigenden und aussteigenden Passagieren uU nicht einfach möglich ist.

Gemäß einer vorteilhaften Ausführungsform weist die Personendetektionseinrichtung zumindest eine Sensoreinheit 9 zur Erfassung einer Sensorgröße und eine Auswerteeinheit 10 auf, wobei die Auswerteeinheit 10 dazu ausgebildet ist, aus der Sensorgröße die Kenngröße K1 zu ermitteln. Die Auswerteeinheit 10 kann dabei auch direkt in der Sensoreinheit 9 integriert sein, könnte aber auch in der Steuerungseinheit 7a der Seilbahn 2a integriert sein. Im gezeigten Beispiel ist die Auswerteeinheit 10 lediglich beispielhaft als separate Einheit ausgeführt. Die Personendetektionseinrichtungen ist über eine geeignete Kommunikationsverbindung mit der Seilbahn-Steuerungseinheit 7a verbunden, um die Sensorgröße oder die Kenngröße K1 an die Seilbahn-Steuerungseinheit 7a zu senden, wie durch den Pfeil in Fig.1 angedeutet ist. Die Kommunikationsverbindung kann dabei drahtlos ausgebildet sein oder auch drahtlos, wie an der der Auswerteeinheit 10 in der dritten Seilbahn 2c angedeutet ist. Die für die Menschenmenge M1 im Zutrittsbereich Za repräsentative Kenngröße K1 kann beispielsweise eine der folgenden Größen sein: Personenanzahl, Lautstärke, Fläche der Menschenmenge, Druck, Gewicht, CO₂-Konzentration, Anzahl von Sensorsignalen. Die verwendete Größe richtet sich im Wesentlichen nach der konkreten Ausgestaltung der Personendetektionseinrichtung, wie nachfolgend noch näher erläutert wird.

In vorteilhafter Weise weist die Sensoreinheit 9 eine Kamera, beispielsweise eine 3D-Kamera oder Wärmebildkamera, zur Aufnahme einer Anzahl von Bildern auf, wie in Fig.1 angedeutet ist. In der ersten Seilbahn 2a ist die die Kamera so angeordnet, dass eine Menschenmenge M1 im Wartebereich W des Zutrittsbereichs Za erfasst werden kann. In der zweiten Seilbahn 2b ist die Kamera so angeordnet, dass eine Menschenmenge M2 im Wartebereich W des Zutrittsbereichs Zb vor und nach der Fahrkarten-Kontrollschranke 11 erfasst werden kann. In der dritten Seilbahn 2c sind beispielhaft zwei Sensoren 9a, 9b in Form von Kameras vorgesehen, wobei eine erste Sensoreinheit 9a so angeordnet ist, dass eine Menschenmenge M3 im Wartebereich W des Zutrittsbereichs Zc erfasst werden kann und eine zweite Sensoreinheit 9b so angeordnet ist, dass eine Menschenmenge im Einstiegsbereich E des Zutrittsbereichs Zc erfasst werden kann.

Über einen in der Auswerteeinheit 10 implementierten Bilderkennungs-Algorithmus kann aus den von der Kamera aufgenommenen Bildern die Kenngröße K1 ermittelt werden. Dies kann wiederum kontinuierlich oder zu diskreten Zeitpunkten erfolgen. Bilderkennungs-Algorithmen sind grundsätzlich im Stand der Technik bekannt, weshalb an dieser Stelle keine detaillierte Beschreibung erfolgt. In einer einfachen Ausführungsform könnte z.B. eine Fläche, die eine Menschenmenge M1 in einem aufgenommenen Bild einnimmt, als Kenngröße K1 verwendet werden. Wenn eine Wärmebildkamera verwendet wird, könnte mittels des Bilderkennungs-Algorithmus z.B. die Personenanzahl ermittelt werden und als Kenngröße K1 verwendet werden.

Eine Sensoreinheit 9 kann alternativ auch zumindest eine Lichtschranke, ein Mikrofon, ein WLAN-Netzwerk oder eine RFID-Antenne aufweisen. Eine Sensoreinheit 9 kann auch zumindest einen der folgenden Sensoren aufweisen: Drucksensor, Waage, Bewegungssensor, wobei zumindest ein Sensor vorzugsweise einen der folgenden Sensoren aufweist: Piezosensor, Infrarotsensor, Ultraschallsensor, CO2-Sensor, Kontaktschalter. Beispielsweise könnten eine Mehrzahl von Drucksensoren oder Kontaktschalter, z.B. in einer rasterförmigen Anordnung, im Boden des Zutrittsbereichs Za angeordnet sein. Als repräsentative Kenngröße K1 für die Menschenmenge M1 im Zutrittsbereich Za könnte dabei eine Anzahl von Sensorsignalen verwendet werden. Das bedeutet im Wesentlichen, je mehr Personen die Menschenmenge M1 aufweist, desto mehr Sensorsignale werden erzeugt.

Es könnte aber beispielsweise auch eine Waage im Boden eines Zutrittsbereichs Z1 angeordnet sein, mit der das Gesamtgewicht der Personen im Zutrittsbereich Z1 gemessen werden kann. Das gemessene Gewicht könnte dann als Maß für die Personenzahl und somit als repräsentative Kenngröße K1 für die Menschenmenge M1 im Zutrittsbereich Za verwendet werden.

Über einen Bewegungsmelder, der beispielsweise in einem relativ schmalen Durchgang des Zutrittsbereichs Za vorgesehen sein kann, könnte direkt die Anzahl an Personen gezählt werden, die den Durchgang passieren. Beispielsweise könnte an jeder Fahrkarten-Kontrollschranke 11 jeweils ein Bewegungsmelder vorgesehen sein. Alternativ könnte auch die Fahrkarten-Kontrollschranke 11 selbst, z.B. ein Lesegerät zum Lesen der Fahrkarte oder ein Drehkreuz, als Sensoreinheit 9 verwendet werden, um die Anzahl von Personen zu zählen, welche die Fahrkarten-Kontrollschranke 11 passieren. Auch eine Lichtschranke könnte im Zutrittsbereich Za, beispielsweise wiederum im Bereich einer Fahrkarten-Kontrollschranke 11, vorgesehen sein, um die Personenanzahl zu ermitteln. Die ermittelte Personenanzahl könnte dann als repräsentative Kenngröße K1 für die Menschenmenge M1 im Zutrittsbereich Za verwendet werden. Auf Basis der ermittelten Personenanzahl könnte die Auswerteeinheit 10 beispielsweise auch eine Anzahl von Personen in einer festgelegten Zeiteinheit ermitteln und als Kenngröße K1 verwenden. Auch ein Mittelwert der ermittelten Personenanzahl über einen festgelegten Zeitraum kann zur Steuerung des Energieverbrauchs herangezogen werden.

Es könnte auch ein aus mehreren parallelen Lichtschranken bestehender Lichtvorhang verwendet werden oder ein aus mehreren sich kreuzenden Lichtschranken bestehendes Lichtgitter. Der Lichtvorhang oder das Lichtgitter könnten dabei in einer im Wesentlichen parallel zum Boden des Zutrittsbereichs Za angeordneten Ebene liegen und dazu ausgebildet sein, eine festgelegte Fläche im Zutrittsbereich Za abzudecken, um die darin befindlichen Personen zu detektieren. Die Zahl der unterbrochenen Lichtschranken des Lichtvorgangs oder des Lichtgitters könnte beispielsweise als repräsentative Kenngröße K1 für die Menschenmenge M1 im Zutrittsbereich Za verwendet werden.

Über ein Mikrofon könnte die Lautstärke im, vorzugsweise geschlossenen, Zutrittsbereich Za ermittelt werden und die Lautstärke könnte als repräsentative Kenngröße K1 für die Menschenmenge M1 im Zutrittsbereich Za verwendet werden. Im geschlossenen Zutrittsbereich Za könnte grundsätzlich auch mittels eines CO₂-Sensors eine CO₂-Konzentration gemessen werden und als repräsentative Kenngröße K1 für die Menschenmenge Ma im Zutrittsbereich Z1 verwendet werden.

Fahrkarten enthalten oftmals einen RFID-Transponder (auch RFID-Tag genannt) und Fahrkarten-Kontrollschranken 11 weisen oftmals eine RFID-Lesegerät auf. Über die Kontrolle der Fahrkarten kann somit zugleich eine Personenzählung durchgeführt werden und die Personenanzahl als Kenngröße K1 verwendet werden. In ähnlicher Weise könnte die Kenngröße K1 über ein verfügbares WLAN-Netzwerk innerhalb einer Seilbahnstation 3a ermittelt werden. Nahezu jeder Passagier führt heutzutage ein Smartphone mit, das in der Regel auch eine WLAN-Antenne aufweist, um eine Verbindung zu einem WLAN-Netzwerk herstellen zu können. Oftmals sind die WLAN-Antennen dauerhaft aktiviert, um dem Benutzer automatisch ein verfügbares WLAN anzuzeigen. Über das WLAN-Netzwerk könnte somit eine Anzahl von aktivierten WLAN-Antennen ermittelt werden, die sich im Empfangsbereich des WLAN-Netzwerks befinden (auch, wenn diese nicht aktiv in das WLAN-Netzwerk eingeloggt sind). Die ermittelte Anzahl kann direkt als Kenngröße K1 verwendet werden oder könnte zur Ermittlung der Kenngröße K1 verwendet werden.

Daraus ist ersichtlich, dass es viele verschiedene Möglichkeiten gibt, wie eine repräsentative Kenngröße K1 für die Menschenmenge M1 im Zutrittsbereich Za ermittelt werden kann, aus denen der Fachmann eine geeignete wählen kann.

Für die Kenngröße K1 der Seilbahn 2a (oder die daraus abgeleitete Größe) kann beispielsweise auch ein Schwellenwert vorgegeben sein und die Seilbahn-Steuerungseinheit 7a kann den Energieverbrauch der Verbraucher der Seilbahn 2a reduzieren, wenn die von der Personendetektionseinrichtung ermittelte Kenngröße K1 (oder die daraus abgeleitete Größe) den vorgegebene Schwellenwert unterschreitet. Die Reduktion des Energieverbrauchs kann dabei, wie oben erwähnt, durch eine Reduktion der Leistung der verfügbaren elektrischen Verbraucher erfolgen, beispielsweise durch eine Reduktion der Fördergeschwindigkeit, ein Abschalten einer Heizeinrichtung, ein Senken der Beleuchtungsstärke, usw. Solange der Schwellenwert unterschritten wird, kann die Seilbahn 2a mit einem festgelegten reduzierten Energieverbrauch, beispielsweise mit einer festgelegten geringeren Fördergeschwindigkeit, betrieben werden. Wenn die von der Personendetektionseinrichtung ermittelte Kenngröße K1 den vorgegebene Schwellenwert wieder erreicht oder überschreitet, kann die Seilbahn-Steuerungseinheit 7a den Energieverbrauch, z.B. durch Erhöhung der Fördergeschwindigkeit, wieder erhöhen. Es kann natürlich auch eine Hysterese-Funktion hinterlegt sein, um ein unerwünschtes rasches Reduzieren und Erhöhen zu vermeiden.

Natürlich können auch mehrere Schwellenwerte vorgegeben sein und die Seilbahn-Steuerungseinheit 7a kann den Energieverbrauch der Seilbahn 2a bei Unterschreiten der Schwellenwerte stufenförmig reduzieren bzw. bei Überschreiten der Schwellenwerte wieder stufenförmig erhöhen.

Für einen oder mehrere elektrische Verbraucher könnte auch eine Funktion zur Ermittlung eines Sollwerts für eine, für den Energieverbrauch repräsentativen, Größe in Abhängigkeit der Kenngrößen K1 vorgesehen sein. Die Seilbahn-Steuerungseinheit 7a kann dann anhand der von der Personendetektionseinrichtung ermittelten Kenngröße K1 mittels der Funktion einen Sollwert, beispielsweise einen Sollwert für die Leistung oder den Strom eines elektrischen Verbrauchers wie z.B. der Antriebseinrichtung 5a, ermitteln und den Verbraucher anhand des ermittelten Sollwerts steuern oder regeln. Die Reduktion bzw. Erhöhung des Energieverbrauchs, z.B. durch Veränderung der Fördergeschwindigkeit, kann in diesem Fall beispielsweise stufenlos erfolgen. In einer einfachen Ausführungsform könnte die Funktion z.B. eine Geradenfunktion mit einer festgelegten Steigung sein. Natürlich wären auch komplexere Funktionen möglich. Statt der Antriebsleistung kann natürlich auch eine äquivalente Größe wie z.B. die Fördergeschwindigkeit oder der elektrische Strom verwendet werden. Es könnte auch für jeden verfügbaren elektrischen Verbraucher eine eigene Funktion vorgesehen sein (oder ein oder mehrere der oben beschriebenen Schwellenwerte) sein. Durch eine entsprechende Wahl der Funktionen kann z.B. ggf. die Leistung von weniger wichtigen Verbrauchern früher reduziert werden oder diese ggf. ganz abgeschaltet werden.

Die Funktionen können beispielsweise in Form von Kennfeldern oder Kennlinien in der Seilbahn-Steuerungseinheit 7a hinterlegt sein. Es könnte auch eine geeignete Regelungseinheit vorgesehen sein, die dazu ausgebildet ist, aus dem für einen Verbraucher ermittelten Sollwert und einem für den zumindest einen Verbraucher ermittelten Istwert eine Stellgröße zu ermitteln und den zumindest einen Verbraucher mit der Stellgröße anzusteuern. Beispielsweise könnte aus der Funktion ein Sollwert für die Antriebsleistung oder den Strom der Antriebseinheit ermittelt werden und es könnte ein aktueller Istwert der Antriebsleistung oder des Stroms ermittelt werden. Mittels eines geeigneten, in der Regelungseinheit implementierten, Reglers könnte eine geeignete Stellgröße ermittelt werden und die die Antriebseinrichtung 5a kann mit der Stellgröße angesteuert werden. Zur Erfassung des Istwerts könnte z.B. eine geeignete Erfassungseinheit vorgesehen sein, mit der die elektrische Leistung oder eine äquivalente Größe, wie z.B. der Strom, erfasst werden kann.

An dieser Stelle sei nochmals erwähnt, dass die anhand der ersten Seilbahn 2a beschrieben Merkmale natürlich in analoger Weise auch in der zweiten Seilbahn 2b (=Sesselbahn) und in der dritten Seilbahn 2c (=Pendelbahn) vorgesehen sein können, wie durch die in Fig.1 dargestellten Bezugszeichen (Seilbahn-Steuerungseinheit 7b+7c, Energie-Ermittlungseinheit 13b+13c, Zutrittsbereich Zb+Zc, Sensoren 9, Auswerteeinheit 10, Kenngröße K2+K3, Menschenmenge M2+M3, usw.) angedeutet ist. Für unterschiedliche Typen von Seilbahnen 2a-2c können auch unterschiedliche Arten von Kenngrößen verwendet werden, z.B. wenn unterschiedliche Personendetektionseinrichtungen verwendet werden, die unterschiedliche Sensoreinheiten 9 aufweisen. Dabei kann beispielsweise für jede Art von Kenngröße ein oder mehrere Schwellenwerte verwendet werden. Wenn als Kenngröße beispielsweise ein Gewicht der Menschenmenge verwendet wird, wird naturgemäß ein anderer Schwellenwert verwendet, als wenn die Personenanzahl der Personen der Menschenmenge als Kenngröße verwendet wird.

Nachfolgend wird ein zweiter Aspekt der Erfindung näher beschrieben. Der zweite Aspekt betrifft die Steuerung des gesamten Seilbahnverbunds 1, der eine Mehrzahl von Seilbahnen 2a-2c aufweist. Im Seilbahnverbund 1 ist eine Seilbahnverbund-Steuerungseinheit 6 zur gemeinsamen Steuerung der Seilbahnen 2a-2c, insbesondere der bereits ausführlich beschriebenen elektrischen Verbraucher, vorgesehen. Die Seilbahnverbund-Steuerungseinheit 6 ist in Fig.1 beispielhaft schematisch und zentral eingezeichnet und kann grundsätzlich an jeder geeigneten Stelle im Seilbahnverbund 1 angeordnet sein. Die Seilbahnverbund-Steuerungseinheit 6 kann beispielweise in einer der Seilbahnstationen 3a-3c, 4a-4c angeordnet sein oder z.B. auch in einem (nicht dargestellten) zentralen Bedienraum, der örtlich woanders angeordnet sein kann, als die Seilbahnen 2a-2c.

Die Seilbahnverbund-Steuerungseinheit 6 weist eine geeignete Hardware und/oder Software auf und ist über eine geeignete Kommunikationsverbindung mit den Seilbahnen 2a-2c verbunden. Vorzugsweise sind in den einzelnen Seilbahnen 2a-2c separate Seilbahn-Steuerungseinheiten 7a-7c zur Steuerung der elektrischen Verbraucher (Antriebseinrichtungen 5a-5c, usw.) vorgesehen. Die Seilbahnverbund-Steuerungseinheit 6 ist dabei vorzugsweise dazu ausgebildet, die elektrischen Verbraucher der Seilbahnen 2a-2c mittelbar über die Seilbahn-Steuerungseinheiten 7a-7c anzusteuern. Auch eine unmittelbare Anbindung an die elektrischen Verbraucher wäre natürlich denkbar, z.B. wenn die Seilbahnen 2a-2c nicht über eigene Seilbahn-Steuerungseinheiten 7a-7c verfügen.

Weiters ist im Seilbahnverbund 1 eine Gesamtenergie-Ermittlungseinheit 14 zur Ermittlung einer, für einen elektrischen Gesamtenergieverbrauch des Seilbahnverbunds 1 repräsentativen, Größe vorgesehen und es ist ein Maximalwert für den elektrischen Gesamtenergieverbrauch des Seilbahnverbunds 1 vorgegeben, vorzugsweise in Form einer Maximalleistung Pmax oder Maximalenergiemenge. Die Seilbahnverbund-Steuerungseinheit 6 ist dazu ausgebildet, den elektrischen Energieverbrauch der Seilbahnen 2a-2c des Seilbahnverbunds 1 in Abhängigkeit der ermittelten Größe so zu steuern, dass der vorgegebene Maximalwert für den elektrischen Gesamtenergieverbrauch des Seilbahnverbunds 1 nicht überschritten wird. Dadurch ist das Energiemanagement nicht nur auf eine Seilbahn beschränkt, wie oben anhand der ersten Seilbahn 2a beschrieben wurde, sondern es kann der Energieverbrauch eines ganzen Seilbahnverbunds 1 zentral gesteuert werden.

Die Seilbahnen 2a-2c des Seilbahnverbunds 1 können auch so ausgebildet sein, wie anhand der Seilbahn 2a beschrieben wurde, wobei jede Seilbahn 2a-2c eine separate Seilbahn-Steuerungseinheit 7a-7c sowie eine eigene Energie-Ermittlungseinheit 13a-13c aufweist. Die Seilbahnverbund-Steuerungseinheit 6 kann hierbei aus dem vorgegebenen Maximalwert für den elektrischen Gesamtenergieverbrauch des Seilbahnverbunds 1 den Maximalwert für den elektrischen Energieverbrauch der Seilbahnen 2a-2c ermitteln und an die Seilbahn-Steuerungseinheiten 7a-7c übermitteln. Die Seilbahn-Steuerungseinheiten 7a-7c steuern dann die elektrischen Verbraucher der zugehörigen Seilbahn 2a-2c in Abhängigkeit der, von den Energie-Ermittlungseinheiten 13a-13c jeweils ermittelten Größen und der erhaltenen Maximalwerte. Zur Ermittlung der Maximalwerte der Seilbahnen 2a-2c aus dem vorgegebenen Maximalwert für den elektrischen Gesamtenergieverbrauch des Seilbahnverbunds 1, kann in der Seilbahnverbund-Steuerungseinheit 6 beispielsweise ein geeigneter Verteilungsschlüssel hinterlegt sein.

Die Seilbahnen 2a-2c des Seilbahnverbunds 1 können auch an eine gemeinsame elektrische Energiequelle 8 angeschlossen sein, durch die der vorgegebene Maximalwert für den elektrischen Gesamtenergieverbrauch des Seilbahnverbunds 1 festgelegt ist. Das kann z.B. bedeuten, dass die gemeinsame Energiequelle 8 eine vorgegebene Maximalleistung Pmax hat, die nicht überschritten werden kann oder soll. Die Seilbahnverbund-Steuerungseinheit 6 kann dann z.B. die Leistung der Seilbahnen 2a-2c entsprechend steuern, dass die für den Betrieb des Seilbahnverbunds 1 erforderliche Gesamtleistung unterhalb der vorgegebenen Maximalleistung Pmax liegt. Alternativ oder zusätzlich zur Maximalleistung Pmax könnte auch eine Maximalenergiemenge vorgegeben sein und die Seilbahnverbund-Steuerungseinheit 6 kann den Seilbahnverbund 1 so steuern, dass die Maximalenergiemenge nicht überschritten wird. Dazu kann beispielsweise ein geeigneter Energiesparplan in der Seilbahnverbund-Steuerungseinheit 6 hinterlegt sein, der gewährleistet, dass die Maximalenergiemenge zu einem bestimmten Zeitpunkt nicht überschritten wird. Beispielsweis könnte eine Energiemenge für einen festgelegten Zeitraum, z.B. einen Tag oder eine Woche, vorgegeben sein.

Eine Summe der maximalen elektrischen Energieverbräuche der Seilbahnen 2a-2c kann auch größer sein, als der für den Seilbahnverbund 1 vorgegebene Maximalwert für den elektrischen Gesamtenergieverbrauch. Beispielsweise kann eine Summe der Nennleistungen der verfügbaren elektrischen Verbraucher der Seilbahnen 2a-2c größer sein als die für den Seilbahnverbund 1 vorgegebene Maximalleistung Pmax. Damit können zwar nicht alle Seilbahnen 2a-2c mit der Nennleistung betrieben werden, die Seilbahnverbund-Steuerungseinheit 6 kann die Energieverbräuche jedoch so steuern, dass der Maximalwert nicht überschritten wird. Beispielsweise können einzelne Seilbahnen 2i mit deutlich reduzierter Leistung (bis zu einer vollständigen Deaktivierung) betrieben werden, während andere Seilbahnen 2i mit Nennleistung betrieben werden. Oder es können alle Seilbahnen 2i mit reduzierter Leistung betrieben werden, wobei die Reduktion natürlich nicht überall gleich groß sein muss. Die Seilbahnverbund-Steuerungseinheit 6 kann somit zur optimalen Lastverteilung des Seilbahnverbundes 1 verwendet werden.

Um bei einzelnen besonders wichtigen Seilbahnen 2i des Seilbahnverbundes 1 eine Reduktion des Energieverbrauchs zu verhindern, können beispielsweise Priorisierungswerte vorgegeben werden, die von der Seilbahnverbund-Steuerungseinheit 6 bei der Steuerung der Verbraucher der Seilbahnen 2i berücksichtigen kann. Beispielsweise könnten Priorisierungswerte zwischen Null und Zehn vorgegeben werden, wobei ein Priorisierungswert von Null bedeutet, dass die zugeordnete Seilbahn 2i die geringste Wichtigkeit hat und ein Priorisierungswert von Zehn bedeutet, dass die zugeordnete Seilbahn 2i die höchste Wichtigkeit hat. Die Seilbahnverbund-Steuerungseinheit 6 kann die Priorisierungswerte beispielsweise dadurch berücksichtigen, dass der Energieverbrauch einer Seilbahn 2i mit einem geringen Priorisierungswert früher reduziert wird, als der Energieverbrauch einer Seilbahn 2i mit einem hohen Priorisierungswert. In ähnlicher Weise könnten auch verschiedenen Verbrauchern einer Seilbahn 2i verschiedene Priorisierungswerte zugeordnet werden, wie anhand der ersten Seilbahn 2a bereits beschrieben wurde. Die Leistung von weniger wichtigen Verbrauchern könnte dann beispielswiese früher reduziert werden, als die Leistung von höher priorisierten Verbrauchern. Die Priorisierungswerte können beispielsweise im oben genannten Verteilungsschlüssel berücksichtigt werden.

Besonders vorteilhaft ist es natürlich, wenn in den Seilbahnen 2a-2c jeweils eine Personendetektionseinrichtung vorgesehen ist, die dazu ausgebildet ist, während des Betriebs der jeweiligen Seilbahn 2a-2c, vorzugsweise kontinuierlich oder intermittierend, eine, für eine Menschenmenge M1-M3 in einem Zutrittsbereich Za-Zc der jeweiligen Seilbahnstation 3a-3c repräsentative, Kenngröße K1-K3 zu ermitteln. Die Seilbahnverbund-Steuerungseinheit 6 kann den elektrischen Energieverbrauch der Seilbahnen 2a-2c dann in Abhängigkeit der Kenngröße K1-K3 oder eine daraus abgeleitete Größe steuern, die zu einem festgelegten Zeitpunkt oder in einem festgelegten Zeitraum während des Betriebs ermittelt wurden. Dadurch können die aktuellen Auslastungen der Seilbahnen 2a-2c bei der Steuerung automatisiert berücksichtigt werden und der Energieverbrauch kann insbesondere bei solchen Seilbahnen 2a-2c reduziert werden, bei welchen ein geringes Passagieraufkommen detektiert wird.

Die Auswerteeinheiten 10 der Personendetektionseinrichtungen können hierbei direkt mit der Seilbahnverbund-Steuerungseinheit 6 verbunden sein, um die Sensorgrößen oder die Kenngrößen K1-K3 an die Seilbahnverbund-Steuerungseinheit 6 zu senden. Die Kommunikationsverbindung kann dabei drahtlos ausgebildet sein oder auch drahtlos, wie an der der Auswerteeinheit 10 in der dritten Seilbahn 2c angedeutet ist. Natürlich könnten die Auswerteeinheiten 10 auch mit den jeweiligen Seilbahn-Steuerungseinheiten 7a-7c verbunden sein, um die Sensorgrößen oder die Kenngrößen K1-K3 an die Seilbahn-Steuerungseinheit 7a-7c zu senden, und die Seilbahn-Steuerungseinheiten 7a-7c könnten die die Sensorgrößen oder die Kenngrößen K1-K3 an die übergeordnete Seilbahnverbund-Steuerungseinheit 6 übermitteln.

Die Personendetektionseinrichtungen können natürlich analog ausgebildet sein, wie anhand der ersten Seilbahn 2a beschrieben wurde, wobei natürlich auch verschiedene Sensoreinheiten 9 und verschiedene Kenngrößen K1-K3 vorgesehen sein könnten. Auf eine Wiederholung wird an dieser Stelle verzichtet.

## Patentansprüche

1. Seilbahn (2a) mit einer Anzahl von Seilbahnstationen (3a, 4a) und einer Anzahl von Seilbahnfahrzeugen (F), die mit einem Förderseil zwischen den Seilbahnstationen (3a, 4a) bewegbar sind, wobei eine Seilbahn-Steuerungseinheit (7a) zur Steuerung der Seilbahn (2a) vorgesehen ist, **dadurch gekennzeichnet, dass** ein Maximalwert für einen elektrischen Energieverbrauch der Seilbahn (2a) vorgegeben ist, vorzugsweise in Form einer Maximalleistung oder einer Maximalenergiemenge, dass eine Energie-Ermittlungseinheit (13a) zur Ermittlung einer, für den elektrischen Energieverbrauch der Seilbahn (2a) repräsentativen, Größe vorgesehen ist, und dass die Seilbahn-Steuerungseinheit (7a) dazu ausgebildet ist, den elektrischen Energieverbrauch zumindest eines elektrischen Verbrauchers der Seilbahn (2a) in Abhängigkeit der ermittelten Größe so zu steuern oder zu regeln, dass der für die Seilbahn (2a) vorgegebene Maximalwert für den elektrischen Energieverbrauch nicht überschritten wird.

2. Seilbahn (2a) nach Anspruch 1, **dadurch gekennzeichnet, dass** die Seilbahn (2a) an eine elektrische Energiequelle (8) angeschlossen ist, durch die der Maximalwert festgelegt ist und/oder dass ein maximaler elektrischer Energieverbrauch der Seilbahn (2a) größer ist, als der vorgegebene Maximalwert.

3. Seilbahn (2a) nach Anspruch 1 oder 2, **dadurch gekennzeichnet, dass** der zumindest eine elektrische Verbraucher einen der folgenden Verbraucher umfasst: eine Antriebseinrichtung (5a) zum Antrieb der Seilbahnfahrzeuge (F), eine Heizeinrichtung zum Heizen der Seilbahnfahrzeuge (F), eine Klimatisierungseinrichtung, eine Beleuchtung, ein Förderband zum Fördern von Personen, eine Tür-Betätigungseinrichtung zum Öffnen/Schließen von Kabinentüren von Seilbahnfahrzeugen.

4. Seilbahn (2a) nach Anspruch 3, **dadurch gekennzeichnet, dass** die Seilbahn-Steuerungseinheit (7a) dazu ausgebildet ist, zur Steuerung des Energieverbrauchs eine Antriebsleistung der Antriebseinrichtung (5a), vorzugsweise durch Änderung einer Fördergeschwindigkeit der Seilbahnfahrzeuge (F), zu verändern und/oder eine Heizleistung der Heizeinrichtung zu verändern und/oder eine Soll-Temperatur der Klimatisierungseinrichtung zu verändern und/oder eine Antriebsleistung des Förderbandes, vorzugsweise durch Änderung einer Förderbandgeschwindigkeit, zu verändern und/oder eine Häufigkeit einer Aktivierung der Tür-Betätigungseinrichtung zu verändern.

5. Seilbahn (2a) nach einem der Ansprüche 1 bis 4, **dadurch gekennzeichnet, dass** eine Mehrzahl von elektrischen Verbrauchern vorgesehen ist, wobei für jeden der Mehrzahl von Verbrauchern ein Priorisierungswert festgelegt ist und dass die Seilbahn-Steuerungseinheit (7a) dazu ausgebildet ist, die Priorisierungswerte bei der Steuerung der Mehrzahl von elektrischen Verbrauchern zu berücksichtigen.

6. Seilbahn (2a) nach einem der Ansprüche 1 bis 5, **dadurch gekennzeichnet, dass** in zumindest einer Seilbahnstation (3a) der Seilbahn (2a) eine Personendetektionseinrichtung vorgesehen ist, die dazu ausgebildet ist, während des Betriebs der Seilbahn (2a), vorzugsweise kontinuierlich oder intermittierend, eine, für eine Menschenmenge (M1) in einem Zutrittsbereich (Za) der jeweiligen Seilbahnstation (3a) repräsentative, Kenngröße (K1) zu ermitteln und dass die Seilbahn-Steuerungseinheit (7a) dazu ausgebildet ist, den elektrischen Energieverbrauch des zumindest einen elektrischen Verbrauchers in Abhängigkeit der zu einem festgelegten Zeitpunkt oder in einem festgelegten Zeitraum während des Betriebs ermittelten Kenngröße (K1) oder eine daraus abgeleiteten Größe zu steuern.

7. Seilbahn (2a) nach Anspruch 6, **dadurch gekennzeichnet, dass** zumindest ein Schwellenwert vorgegeben ist und dass die Seilbahn-Steuerungseinheit (7a) dazu ausgebildet ist, den elektrischen Energieverbrauch des zumindest einen elektrischen Verbrauchers zu reduzieren, wenn die von der Personendetektionseinrichtung ermittelte Kenngröße (K1) oder die daraus abgeleitete Größe den vorgegebene Schwellenwert unterschreitet, wobei die Seilbahn-Steuerungseinheit (7a) vorzugsweise dazu ausgebildet ist, den elektrischen Energieverbrauch wieder zu erhöhen, wenn die ermittelte Kenngröße (K1) oder die daraus abgeleitete Größe den vorgegebene Schwellenwert erreicht oder überschreitet, wobei vorzugsweise mehrere Schwellenwerte vorgegeben sind und die Seilbahn-Steuerungseinheit (7a) dazu ausgebildet ist, den elektrischen Energieverbrauch bei Unterschreiten der Schwellenwerte stufenförmig zu reduzieren bzw. bei Überschreiten der Schwellenwerte wieder zu erhöhen.

8. Seilbahn (2a) nach Anspruch 6 oder 7, **dadurch gekennzeichnet, dass** für den zumindest einen elektrischen Verbraucher eine Funktion zur Ermittlung eines Sollwerts einer, für den elektrischen Energieverbrauch repräsentativen, Größe in Abhängigkeit der Kenngröße (K1) oder der daraus abgeleiteten Größe vorgegeben ist und dass die Seilbahn-Steuerungseinheit (7a) dazu ausgebildet ist, anhand der von der Personendetektionseinrichtung ermittelten Kenngröße (K1) oder der daraus abgeleiteten Größe mittels der Funktion einen Sollwert der, für den elektrischen Energieverbrauch repräsentativen, Größe zu ermitteln und den zumindest einen elektrischen Verbraucher anhand des ermittelten Sollwerts zu steuern.

9. Seilbahn (2a) nach Anspruch 8, **dadurch gekennzeichnet, dass** eine Regelungseinheit vorgesehen ist, die dazu ausgebildet ist, aus dem ermittelten Sollwert und einem für den zumindest einen Verbraucher ermittelten Istwert eine Stellgröße zu ermitteln und den zumindest einen Verbraucher mit der Stellgröße anzusteuern.

10. Seilbahn (2a) nach einem der Ansprüche 6 bis 9, **dadurch gekennzeichnet, dass** die Personendetektionseinrichtung zumindest eine Sensoreinheit (9) zur Erfassung einer Sensorgröße im Zutrittsbereich (Z) und eine Auswerteeinheit (10) aufweist, die dazu ausgebildet ist, aus der Sensorgröße die Kenngröße (K1) zu ermitteln, wobei die Auswerteeinheit (10) vorzugsweise in der Sensoreinheit (9) oder in der Seilbahn-Steuerungseinheit (7a) integriert ist.

11. Seilbahn (2a) nach Anspruch 10, **dadurch gekennzeichnet, dass** die Sensoreinheit (9) eine Kamera, vorzugsweise eine 3D-Kamera oder Wärmebildkamera, oder zumindest eine Lichtschranke oder ein Mikrofon oder ein WLAN-Netzwerk oder eine RFID-Antenne oder zumindest einen der folgenden Sensoren aufweist: Drucksensor, Waage, Bewegungssensor, wobei zumindest ein Sensor vorzugsweise einen der folgenden Sensoren aufweist: Piezosensor, Ultraschallsensor, Infrarotsensor, CO2-Sensor, Kontaktschalter.

12. Seilbahn (2a) nach einem der Ansprüche 6 bis 11, **dadurch gekennzeichnet, dass** der Zutrittsbereich (Z) einen Einstiegsbereich (E) für Personen zum Einsteigen in die Seilbahnfahrzeuge (F) aufweist und einen Wartebereich (W) zum Anstellen für Personen aufweist, wobei der Einstiegsbereich (E) und der Anstellbereich (W) durch eine Fahrkarten-Kontrollschranke (11) getrennt sind und dass die Personendetektionseinrichtung dazu ausgebildet ist, die Kenngröße (K1) im Einstiegsbereich (E) und/oder im Wartebereich (W) zu ermitteln.

13. Seilbahn (2a) nach einem der Ansprüche 6 bis 12, **dadurch gekennzeichnet, dass** die für die Menschenmenge (M1) im Zutrittsbereich (Za) repräsentative Kenngröße (K1) eine der folgenden Größen ist: Personenanzahl, Lautstärke, Fläche der Menschenmenge, Druck, Gewicht, CO₂-Konzentration, Anzahl von Sensorsignalen und/oder dass die aus der Kenngröße (K1) abgeleitete Größe ein zeitlicher Mittelwert der Kenngröße (K1) oder eine zeitliche Änderung der Kenngröße (K1) ist.

14. Seilbahnverbund (1) aufweisend eine Mehrzahl von Seilbahnen (2a-2c), die jeweils eine Anzahl von Seilbahnstationen (3a-3c, 4a-4c) und eine Anzahl von Seilbahnfahrzeugen (F) aufweisen, die zwischen den Seilbahnstationen (3a-3c, 4a-4c) bewegbar sind, **dadurch gekennzeichnet, dass** eine Seilbahnverbund-Steuerungseinheit (6) zur Steuerung des Seilbahnverbunds (1) vorgesehen ist, dass ein Maximalwert für einen elektrischen Gesamtenergieverbrauch des Seilbahnverbunds (1) vorgegeben ist, vorzugsweise in Form einer Maximalleistung oder Maximalenergiemenge, dass eine Gesamtenergie-Ermittlungseinheit (14) zur Ermittlung einer, für einen elektrischen Gesamtenergieverbrauch des Seilbahnverbunds (1) repräsentativen, Größe vorgesehen ist, und dass die Seilbahnverbund-Steuerungseinheit (6) dazu ausgebildet ist, den elektrischen Energieverbrauch zumindest einer Seilbahn (2a-2c) des Seilbahnverbunds (1) in Abhängigkeit der ermittelten Größe so zu steuern, dass der vorgegebene Maximalwert für den elektrischen Gesamtenergieverbrauch des Seilbahnverbunds (1) nicht überschritten wird.

15. Seilbahnverbund (1) nach Anspruch 14, **dadurch gekennzeichnet, dass** die zumindest eine Seilbahn (2a) des Seilbahnverbunds (1) nach einem der Ansprüche 1 bis 13 ausgebildet ist und dass die Seilbahnverbund-Steuerungseinheit (6) dazu ausgebildet ist, aus dem vorgegebenen Maximalwert für den elektrischen Gesamtenergieverbrauch des Seilbahnverbunds (1) den Maximalwert für den elektrischen Energieverbrauch der zumindest einen Seilbahn (2a) zu ermitteln und an die Seilbahn-Steuerungseinheit (7a) der zumindest einen Seilbahn (2a) zu übermitteln.

16. Seilbahnverbund (1) nach Anspruch 14 oder 15, **dadurch gekennzeichnet, dass** die Seilbahnen (2a-2c) des Seilbahnverbunds (1) an eine gemeinsame elektrische Energiequelle (8) angeschlossen sind, durch die der vorgegebene Maximalwert für den elektrischen Gesamtenergieverbrauch des Seilbahnverbunds festgelegt ist und/oder dass eine Summe der maximalen elektrischen Energieverbräuche der Seilbahnen (2a-2c) größer ist als der für den Seilbahnverbund (1) vorgegebene Maximalwert für den elektrischen Gesamtenergieverbrauch.

17. Seilbahnverbund (1) nach einem der Ansprüche 14 bis 16, **dadurch gekennzeichnet, dass** für eine Mehrzahl von Seilbahnen (2a-2c) des Seilbahnverbunds (1) jeweils ein Priorisierungswert vorgegeben ist und dass die Seilbahnverbund-Steuerungseinheit (6) dazu ausgebildet ist, die Priorisierungswerte bei der Steuerung des elektrischen Energieverbrauchs der Seilbahnen (2a-2c) zu berücksichtigen.

18. Verfahren zum Betreiben einer Seilbahn (2a), die eine Anzahl von Seilbahnstationen (3a, 4a) und eine Anzahl von Seilbahnfahrzeugen (F) aufweist, die mit einem Förderseil zwischen den Seilbahnstationen (3a, 4a) bewegbar sind, wobei die Seilbahn (2a) von einer Seilbahn-Steuerungseinheit (7a) gesteuert wird, **dadurch gekennzeichnet, dass** eine für einen elektrischen Energieverbrauch der Seilbahn (2a) repräsentative Größe ermittelt wird, dass ein Maximalwert für den elektrischen Energieverbrauch der Seilbahn (2a) vorgegeben wird, vorzugsweise in Form einer Maximalleistung oder einer Maximalenergiemenge, und dass die Seilbahn-Steuerungseinheit (7a) einen elektrischen Energieverbrauch zumindest eines elektrischen Verbrauchers der Seilbahn (2a) in Abhängigkeit der ermittelten Größe so steuert, dass der für die Seilbahn (2a) vorgegebene Maximalwert für den elektrischen Energieverbrauch nicht überschritten wird, wobei die Seilbahn (2a) vorzugsweise nach einem der Ansprüche 1 bis 13 ausgebildet ist.

19. Verfahren nach Anspruch 18, **dadurch gekennzeichnet, dass** in zumindest einer Seilbahnstation (3a) der Seilbahn (2a) während des Betriebs der Seilbahn (2a) mittels einer Personendetektionseinrichtung, vorzugsweise kontinuierlich oder intermittierend, eine, für eine Menschenmenge (M1) in einem Zutrittsbereich (Za) der Seilbahnstation (3a) repräsentative, Kenngröße (K1) ermittelt wird und dass die Seilbahn-Steuerungseinheit (7a) den elektrischen Energieverbrauch des zumindest einen Verbrauchers der Seilbahn (2a) in Abhängigkeit der zu einem festgelegten Zeitpunkt oder in einem festgelegten Zeitraum während des Betriebs der Seilbahn (2a) ermittelte Kenngröße (K1) oder eine daraus abgeleitete Größe steuert.

20. Verfahren zum Betreiben eines Seilbahnverbunds (1), der eine Mehrzahl von Seilbahnen (2a-2c) aufweist, die jeweils eine Anzahl von Seilbahnstationen (3a-3c, 4a-4c) und eine Anzahl von Seilbahnfahrzeugen (F) aufweisen, die zwischen den Seilbahnstationen (3a-3c, 4a-4c) bewegbar sind, **dadurch gekennzeichnet, dass** der Seilbahnverbund (1) von einer Seilbahnverbund-Steuerungseinheit (6) gesteuert wird, dass eine für einen elektrischen Gesamtenergieverbrauch des Seilbahnverbunds (1) repräsentative Größe ermittelt wird, dass ein Maximalwert für den elektrischen Gesamtenergieverbrauch des Seilbahnverbunds (1) vorgegeben wird, vorzugsweise in Form einer Maximalleistung oder Maximalenergiemenge, und dass die Seilbahnverbund-Steuerungseinheit (6) einen elektrischen Energieverbrauch zumindest einer Seilbahn (2a-2c) des Seilbahnverbunds (1) so steuert, dass der vorgegebene Maximalwert für den elektrischen Gesamtenergieverbrauch des Seilbahnverbunds (1) nicht überschritten wird, wobei der Seilbahnverbund (1) vorzugsweise nach einem der Ansprüche 14 bis 17 ausgebildet ist.

## Claims

1. A cable car (2a) having a number of cable car stations (3a, 4a) and a number of cable car vehicles (F) movable with a haulage rope between the cable car stations (3a, 4a), wherein a cable car control unit (7a) is provided for controlling the cable car (2a), **characterized in that** a maximum value for an electrical energy consumption of the cable car (2a) is predetermined, preferably in the form of a maximum power or a maximum amount of energy, **in that** an energy detection unit (13a) is provided for determining a variable which is representative of the electrical energy consumption of the cable car (2a), **and in that** the cable car control unit (7a) is designed to control or regulate the electrical energy consumption of at least one electrical consumer of the cable car (2a) depending on the determined variable in such a manner that the maximum value for the electrical energy consumption predetermined for the cable car (2a) is not exceeded.

2. The cable car (2a) according to claim 1, **characterized in that** the cable car (2a) is connected to an electric power source (8) by which the maximum value is determined, and/or **in that** a maximum electric power consumption of the cable car (2a) is greater than the predetermined maximum value.

3. The cable car (2a) according to claim 1 or 2, **characterized in that** the at least one electrical consumer comprises one of the following consumers: a drive device (5a) for driving the cable car vehicles (F), a heating device for heating the cable car vehicles (F), an air conditioning device, a lighting, a conveyor belt for conveying people, a door actuation device for opening/closing cabin doors of cable car vehicles.

4. The cable car (2a) according to claim 3, **characterized in that** the cable car control unit (7a) is designed to change a drive power of the drive device (5a), preferably by changing a conveyor speed of the cable car vehicles (F), and/or to change a heating power of the heating device and/or to change a set temperature of the air conditioning device and/or to change a drive power of the conveyor belt, preferably by changing a conveyor belt speed, and/or to change a frequency of activation of the door actuation device to control the energy consumption.

5. The cable car (2a) according to any of claims 1 to 4, **characterized in that** a plurality of electrical consumers is provided, wherein a prioritization value is determined for each of the plurality of consumers, and **in that** the cable car control unit (7a) is designed to take the prioritization values into account when controlling the plurality of electrical consumers.

6. The cable car (2a) according to any of the claims 1 to 5, **characterized in that** a people detection device is provided in at least one cable car station (3a) of the cable car (2a), wherein the people detection device is designed to, preferably continuously or intermittently, determine a characteristic variable (K1), which is representative of a crowd (M1) in an access area (Za) of the respective cable car station (3a), during operation of the cable car (2a), and **in that** the cable car control unit (7a) is designed to control the electrical energy consumption of the at least one electrical consumer as a function of the characteristic variable (K1) determined at a fixed time or in a fixed period during operation or a variable derived therefrom.

7. The cable car (2a) according to claim 6, **characterized in that** at least one threshold value is predetermined, and **in that** the cable car control unit (7a) is designed to reduce the electrical energy consumption of the at least one electrical consumer, if the characteristic variable (K1) determined by the people detection device or the variable derived therefrom falls below the predetermined threshold value, wherein the cable car control unit (7a) is preferably designed to increase the electrical energy consumption again, if the determined characteristic variable (K1) or the variable derived therefrom reaches or exceeds the predetermined threshold value, wherein preferably a plurality of threshold values are predetermined and the cable car control unit (7a) is designed to reduce the electrical energy consumption in steps, if the threshold values are not reached, or to increase it again, if the threshold values are exceeded.

8. The cable car (2a) according to claim 6 or 7, **characterized in that** for the at least one electrical consumer, a function for determining a nominal value of a variable, which is representative of the electrical energy consumption, is predetermined as a function of the characteristic variable (K1) or the variable derived therefrom, and **in that** the cable car control unit (7a) is designed to determine a nominal value of the variable, which is representative of the electrical energy consumption, on the basis of the characteristic variable (K1) determined by the people detection device or the variable derived therefrom by using the function and to control the at least one electrical consumer by means of the determined nominal value.

9. The cable car (2a) according to claim 8, **characterized in that** a control unit is provided which is designed to determine a correcting variable from the determined nominal value and an actual value determined for the at least one consumer and to control the at least one consumer with the correcting variable.

10. The cable car (2a) according to any of the claims 6 to 9, **characterized in that** the people detection device has at least one sensor unit (9) for detecting a sensor variable in the access area (Z) and an evaluation unit (10) which is designed to determine the characteristic variable (K1) from the sensor variable, wherein the evaluation unit (10) is preferably integrated in the sensor unit (9) or in the cable car control unit (7a).

11. The cable car (2a) according to claim 10, **characterized in that** the sensor unit (9) has a camera, preferably a 3D camera or thermal imaging camera, or at least one light barrier or a microphone or a WLAN network or an RFID antenna or at least one of the following sensors: pressure sensor, scale, movement sensor, wherein at least one sensor preferably has one of the following sensors: piezo sensor, ultrasonic sensor, infrared sensor, CO2 sensor, contact switch.

12. The cable car (2a) according to any of the claims 6 to 11, **characterized in that** the access area (Z) has an boarding area (E) for people to board the cable car vehicles (F) and a waiting area (W) for people to queue, wherein the boarding area (E) and the queuing area (W) are separated by a ticket control barrier (11), and **in that** the people detection device is designed to determine the characteristic variable (K1) in the boarding area (E) and/or in the waiting area (W).

13. The cable car (2a) according to any of claims 6 to 12, **characterized in that** the characteristic variable (K1), which is representative of the crowd (M1) in the access area (Za), is one of the following: number of people, volume, area of crowd, pressure, weight, CO₂ concentration, number of sensor signals, and/or **in that** the variable derived from the characteristic variable (K1) is a time average value of the characteristic variable (K1) or a change of the characteristic variable (K1) over time.

14. A cable car network (1) having a plurality of cable cars (2a-2c) each having a number of cable car stations (3a-3c, 4a-4c) and a number of cable car vehicles (F) movable between the cable car stations (3a-3c, 4a-4c), **characterized in that** a cable car network control unit (6) is provided for controlling the cable car network (1), **in that** a maximum value for a total electrical energy consumption of the cable car network (1) is predetermined, preferably in the form of a maximum power or maximum amount of energy, **in that** a total energy determination unit (14) is provided for determining a variable, which is representative of a total electrical energy consumption of the cable car network (1), and **in that** the cable car network control unit (6) is designed to control the electrical energy consumption of at least one cable car (2a-2c) of the cable car network (1) depending on the determined variable such that the predetermined maximum value for the total electrical energy consumption of the cable car network (1) is not exceeded.

15. The cable car network (1) according to claim 14, **characterized in that** the at least one cable car (2a) of the cable car network (1) is designed according to any of the claims 1 to 13, and **in that** the cable car network control unit (6) is designed to determine the maximum value for the electrical energy consumption of the at least one cable car (2a) from the predetermined maximum value for the total electrical energy consumption of the cable car network (1) and to transmit this maximum value to the cable car control unit (7a) of the at least one cable car (2a).

16. The cable car network (1) according to claim 14 or 15, **characterized in that** the cable cars (2a-2c) of the cable car network (1) are connected to a common electrical energy source (8) which determines the predetermined maximum value for the total electrical energy consumption of the cable car network, and/or **in that** a sum of the maximum electrical energy consumptions of the cable cars (2a-2c) is greater than the maximum value for the total electrical energy consumption predetermined for the cable car network (1).

17. The cable car network (1) according to any of claims 14 to 16, **characterized in that** a prioritization value is predetermined in each case for a plurality of cable cars (2a-2c) of the cable car network (1), and **in that** the cable car network control unit (6) is designed to take into account the prioritization values when controlling the electrical energy consumption of the cable cars (2a-2c).

18. A method of operating a cable car (2a) having a plurality of cable car stations (3a, 4a) and a plurality of cable car vehicles (F) movable with a haulage rope between the cable car stations (3a, 4a), wherein the cable car (2a) is controlled by a cable car control unit (7a), **characterized in that** a variable, which is representative of an electrical energy consumption of the cable car (2a), is determined, **in that** a maximum value for the electrical energy consumption of the cable car (2a) is predetermined, preferably in the form of a maximum power or a maximum amount of energy, and **in that** the cable car control unit (7a) controls an electrical energy consumption of at least one electrical consumer of the cable car (2a) depending on the determined variable in such a manner that the maximum value for the electrical energy consumption predetermined for the cable car (2a) is not exceeded, wherein the cable car (2a) is preferably designed according to any of claims 1 to 13.

19. The method according to claim 18, **characterized in that** a characteristic variable (K1), which is representative of a crowd (M1) in an access area (Za) of the cable car station (3a), is, preferably continuously or intermittently, determined by a people detection device in at least one cable car station (3a) of the cable car (2a) during the operation of the cable car (2a), and **in that** the cable car control unit (7a) controls the electrical energy consumption of the at least one consumer of the cable car (2a) as a function of the characteristic variable (K1) determined at a fixed time or in a fixed period during the operation of the cable car (2a) or a variable derived therefrom.

20. The method of operating a cable car network (1) having a plurality of cable cars (2a-2c) each having a number of cable car stations (3a-3c, 4a-4c) and a number of cable car vehicles (F) movable between the cable car stations (3a-3c, 4a-4c), **characterized in that** the cable car network (1) is controlled by a cable car network control unit (6), **in that a** variable representative of a total electrical energy consumption of the cable car network (1) is determined, **in that** a maximum value for the total electrical energy consumption of the cable car network (1) is predetermined, preferably in the form of a maximum power or maximum amount of energy, and **in that** the cable car network control unit (6) controls an electrical energy consumption of at least one cable car (2a-2c) of the cable car network (1) in such a manner that the predetermined maximum value for the total electrical energy consumption of the cable car network (1) is not exceeded, wherein the cable car network (1) is preferably designed according to one of the claims 14 to 17.

## Revendications

1. Téléphérique (2a) comportant un certain nombre de stations (3a, 4a) de téléphérique et un certain nombre de véhicules (F) de téléphérique qui peuvent être déplacés à l'aide d'un câble de transport entre les stations (3a, 4a) de téléphérique, une unité de commande (7a) de téléphérique pour la commande du téléphérique (2a) étant prévue, **caractérisé en ce qu'**une valeur maximale pour une consommation d'énergie électrique du téléphérique (2a) est prédéfinie, de préférence sous la forme d'une puissance maximale ou d'une quantité d'énergie maximale, **en ce qu'**une unité de détermination d'énergie (13a) pour la détermination d'une grandeur représentative de la consommation d'énergie électrique du téléphérique (2a) est prévue et **en ce que** l'unité de commande (7a) de téléphérique est conçue pour commander ou réguler la consommation d'énergie électrique d'au moins un consommateur électrique du téléphérique (2a) en fonction de la grandeur déterminée de telle sorte que la valeur maximale prédéfinie pour la consommation d'énergie électrique pour le téléphérique (2a) n'est pas dépassée.

2. Téléphérique (2a) selon la revendication 1, **caractérisé en ce que** le téléphérique (2a) est raccordé à une source d'énergie électrique (8) par laquelle la valeur maximale est fixée et/ou **en ce qu'**une consommation d'énergie électrique maximale du téléphérique (2a) est supérieure à la valeur maximale prédéfinie.

3. Téléphérique (2a) selon la revendication 1 ou 2, **caractérisé en ce que** l'au moins un consommateur électrique comprend l'un des consommateurs suivants : un dispositif d'entraînement (5a) pour l'entraînement des véhicules (F) de téléphérique, un dispositif de chauffage pour le chauffage des véhicules (F) de téléphérique, un dispositif de climatisation, un éclairage, une bande transporteuse pour le transport de personnes, un dispositif d'actionnement de porte pour l'ouverture/la fermeture de portes de cabine de véhicules de téléphérique.

4. Téléphérique (2a) selon la revendication 3, **caractérisé en ce que** l'unité de commande (7a) de téléphérique est conçue, pour la commande de la consommation d'énergie, pour modifier une puissance d'entraînement du dispositif d'entraînement (5a), de préférence en modifiant une vitesse de transport des véhicules (F) de téléphérique et/ou pour modifier une puissance de chauffage du dispositif de chauffage et/ou pour modifier une température de consigne du dispositif de climatisation et/ou pour modifier une puissance d'entraînement de la bande transporteuse, de préférence en modifiant une vitesse de la bande transporteuse, et/ou pour modifier une fréquence d'une activation du dispositif d'actionnement de porte.

5. Téléphérique (2a) selon l'une des revendications 1 à 4,
**caractérisé en ce qu'**une pluralité de consommateurs électriques est prévue, une valeur de priorisation étant fixée pour chacun de la pluralité de consommateurs et **en ce que** l'unité de commande (7a) de téléphérique est conçue pour prendre en compte les valeurs de priorisation lors de la commande de la pluralité de consommateurs électriques.

6. Téléphérique (2a) selon l'une des revendications 1 à 5,
**caractérisé en ce que,** dans au moins une station (3a) de téléphérique du téléphérique (2a), un dispositif de détection de personnes est prévu, qui est conçu pour déterminer, pendant l'exploitation du téléphérique (2a), de préférence de manière continue ou intermittente, une grandeur caractéristique (K1) représentative d'une foule (M1) dans une zone d'accès (Za) de la station (3a) de téléphérique respective et **en ce que** l'unité de commande (7a) de téléphérique est conçue pour commander la consommation d'énergie électrique de l'au moins un consommateur électrique en fonction de la grandeur caractéristique (K1), ou d'une grandeur qui en est dérivée, déterminée à un moment fixé ou dans une période fixée pendant l'exploitation.

7. Téléphérique (2a) selon la revendication 6, **caractérisé en ce qu'au** moins une valeur seuil est prédéfinie et **en ce que** l'unité de commande (7a) de téléphérique est conçue pour réduire la consommation d'énergie électrique de l'au moins un consommateur électrique lorsque la grandeur caractéristique (K1), ou la grandeur qui en est dérivée, déterminée par le dispositif de détection de personnes est inférieure à la valeur seuil prédéfinie, l'unité de commande (7a) de téléphérique étant de préférence conçue pour augmenter à nouveau la consommation d'énergie électrique lorsque la grandeur caractéristique (K1), ou la grandeur qui en est dérivée, déterminée atteint ou dépasse la valeur seuil prédéfinie, plusieurs valeurs seuils étant de préférence prédéfinies et l'unité de commande (7a) de téléphérique étant conçue pour réduire progressivement la consommation d'énergie électrique lors du passage sous les valeurs seuils ou pour l'augmenter lors du dépassement des valeurs seuils.

8. Téléphérique (2a) selon la revendication 6 ou 7, **caractérisé en ce qu'**une fonction pour la détermination d'une valeur de consigne d'une grandeur représentative de la consommation d'énergie électrique en fonction de la grandeur caractéristique (K1), ou de la grandeur qui en est dérivée, est prédéfinie pour l'au moins un consommateur électrique et **en ce que** l'unité de commande (7a) de téléphérique est conçue pour déterminer, à l'aide de la grandeur caractéristique (K1), ou de la grandeur qui en est dérivée, déterminée par le dispositif de détection de personnes, au moyen de la fonction, une valeur de consigne de la grandeur représentative de la consommation d'énergie électrique et pour commander l'au moins un consommateur électrique à l'aide de la valeur de consigne déterminée.

9. Téléphérique (2a) selon la revendication 8, **caractérisé en ce qu'**une unité de régulation est prévue, qui est conçue pour déterminer une grandeur de réglage à partir de la valeur de consigne déterminée et à partir d'une valeur réelle déterminée pour l'au moins un consommateur et pour commander l'au moins un consommateur à l'aide de la grandeur de réglage.

10. Téléphérique (2a) selon l'une des revendications 6 à 9,
**caractérisé en ce que** le dispositif de détection de personnes présente au moins une unité de capteur (9) pour la détection d'une grandeur de capteur dans la zone d'accès (Z) et une unité d'évaluation (10) qui est conçue pour déterminer la grandeur caractéristique (K1) à partir de la grandeur de capteur, l'unité d'évaluation (10) étant de préférence intégrée dans l'unité de capteur (9) ou dans l'unité de commande (7a) de téléphérique.

11. Téléphérique (2a) selon la revendication 10, **caractérisé en ce que** l'unité de capteur (9) présente une caméra, de préférence une caméra 3D ou une caméra thermique, ou au moins une cellule photoélectrique ou un microphone ou un réseau WLAN ou une antenne RFID ou au moins l'un des capteurs suivants : capteur de pression, balance, capteur de mouvement, au moins un capteur présentant de préférence l'un des capteurs suivants : capteur piézoélectrique, capteur à ultrasons, capteur infrarouge, capteur de CO2, interrupteur à contact.

12. Téléphérique (2a) selon l'une des revendications 6 à 11,
**caractérisé en ce que** la zone d'accès (Z) présente une zone d'entrée (E) pour les personnes, permettant de monter dans les véhicules (F) de téléphérique et une zone d'attente (W), permettant d'aligner les personnes, la zone d'entrée (E) et la zone d'alignement (W) étant séparées par une barrière de contrôle de billets (11) et **en ce que** le dispositif de détection de personnes est conçu pour déterminer la grandeur caractéristique (K1) dans la zone d'entrée (E) et/ou dans la zone d'attente (W).

13. Téléphérique (2a) selon l'une des revendications 6 à 12,
**caractérisé en ce que** la grandeur caractéristique (K1) représentative de la foule (M1) dans la zone d'accès (Za) est l'une des grandeurs suivantes : nombre de personnes, volume sonore, surface de la foule, pression, poids, concentration en CO₂, nombre de signaux de capteur et/ou **en ce que** la grandeur dérivée de la grandeur caractéristique (K1) est une valeur moyenne dans le temps de la grandeur caractéristique (K1) ou une modification dans le temps de la grandeur caractéristique (K1).

14. Groupement (1) de téléphériques présentant une pluralité de téléphériques (2a-2c) qui présentent respectivement un certain nombre de stations (3a-3c, 4a-4c) de téléphérique et un certain nombre de véhicules (F) de téléphériques qui peuvent être déplacés entre les stations (3a-3c, 4a-4c) de téléphérique, **caractérisé en ce qu'**unité de commande (6) de groupement de téléphériques pour la commande du groupement (1) de téléphérique est prévue, **en ce qu'**une valeur maximale pour une consommation d'énergie électrique totale du groupement (1) de téléphériques est prédéfinie, de préférence sous la forme d'une puissance maximale ou d'une quantité d'énergie maximale, **en ce qu'**une unité de détermination d'énergie totale (14) pour la détermination d'une grandeur représentative d'une consommation d'énergie électrique totale du groupement (1) de téléphériques est prévue et **en ce que** l'unité de commande (6) de groupement de téléphériques est conçue pour commander la consommation d'énergie électrique d'au moins un téléphérique (2a-2c) du groupement (1) de téléphériques en fonction de la grandeur déterminée, de telle sorte que la valeur maximale prédéfinie pour la consommation d'énergie électrique totale du groupement (1) de téléphériques n'est pas dépassée.

15. Groupement (1) de téléphériques selon la revendication 14,
**caractérisé en ce que** l'au moins un téléphérique (2a) du groupement (1) de téléphériques est conçu selon l'une des revendications 1 à 13 et **en ce que** l'unité de commande (6) de groupement de téléphériques est conçue pour déterminer, à partir de la valeur maximale prédéfinie pour la consommation d'énergie électrique totale du groupement (1) de téléphériques, la valeur maximale pour la consommation d'énergie électrique de l'au moins un téléphérique (2a) et pour la transmettre à l'unité de commande (7a) de téléphérique de l'au moins un téléphérique (2a).

16. Groupement (1) de téléphériques selon la revendication 14 ou 15, **caractérisé en ce que** les téléphériques (2a-2c) du groupement (1) de téléphériques sont raccordés à une source d'énergie électrique commune (8), par laquelle la valeur maximale prédéfinie pour la consommation d'énergie électrique totale du groupement de téléphériques est fixée et/ou **en ce qu'**une somme des consommations d'énergie électrique maximales des téléphériques (2a-2c) est supérieure à la valeur maximale prédéfinie pour le groupement (1) de téléphériques pour la consommation d'énergie électrique totale.

17. Groupement (1) de téléphériques selon l'une des revendications 14 à 16, **caractérisé en ce que,** pour une pluralité de téléphériques (2a-2c) du groupement (1) de téléphériques, une valeur de priorisation est respectivement prédéfinie et **en ce que** l'unité de commande (6) du groupement de téléphériques est conçue pour prendre en compte les valeurs de priorisation lors de la commande de la consommation d'énergie électrique des téléphériques (2a-2c).

18. Procédé d'exploitation d'un téléphérique (2a) qui présente un certain nombre de stations (3a, 4a) de téléphérique et un certain nombre de véhicules (F) de téléphérique qui peuvent être déplacés à l'aide d'un câble de transport entre les stations (3a, 4a) de téléphérique, le téléphérique (2a) étant commandé par une unité de commande (7a) de téléphérique, **caractérisé en ce qu'**une grandeur représentative d'une consommation d'énergie électrique du téléphérique (2a) est déterminée, **en ce qu'**une valeur maximale pour la consommation d'énergie électrique du téléphérique (2a) est prédéfinie, de préférence sous la forme d'une puissance maximale ou d'une quantité d'énergie maximale, et **en ce que** l'unité de commande (7a) de téléphérique commande une consommation d'énergie électrique d'au moins un consommateur électrique du téléphérique (2a) en fonction de la grandeur déterminée de telle sorte que la valeur maximale de consommation d'énergie électrique prédéfinie pour le téléphérique (2a) n'est pas dépassée, le téléphérique (2a) étant de préférence conçu selon l'une des revendications 1 à 13.

19. Procédé selon la revendication 18, **caractérisé en ce que,** dans au moins une station (3a) de téléphérique du téléphérique (2a), pendant l'exploitation du téléphérique (2a), une grandeur caractéristique (K1) représentative d'une foule (M1) dans une zone d'accès (Za) de la station (3a) de téléphérique est déterminée au moyen d'un dispositif de détection de personnes, de préférence de manière continue ou intermittente, et **en ce que** l'unité de commande (7a) de téléphérique commande la consommation d'énergie électrique de l'au moins un consommateur du téléphérique (2a) en fonction de la grandeur caractéristique (K1), ou d'une grandeur qui en est dérivée, déterminée à un moment fixé ou pendant une période fixée pendant l'exploitation du téléphérique (2a).

20. Procédé d'exploitation d'un groupement (1) de téléphériques, qui présente une pluralité de téléphériques (2a-2c), qui présentent respectivement un certain nombre de stations (3a-3c, 4a-4c) de téléphérique et un certain nombre de véhicules (F) de téléphérique, qui peuvent être déplacés entre les stations (3a-3c, 4a-4c) de téléphérique, **caractérisé en ce que** le groupement (1) de téléphériques est commandé par une unité de commande (6) de groupement de téléphériques, **en ce qu'**une grandeur représentative d'une consommation d'énergie électrique totale du groupement (1) de téléphériques est déterminée, **en ce qu'**une valeur maximale pour la consommation d'énergie électrique totale du groupement (1) de téléphériques est prédéfinie, de préférence sous la forme d'une puissance maximale ou d'une quantité d'énergie maximale, et **en ce que** l'unité de commande (6) de groupement de téléphériques commande une consommation d'énergie électrique d'au moins un téléphérique (2a-2c) du groupement (1) de téléphériques de telle sorte que la valeur maximale prédéfinie pour la consommation d'énergie électrique totale du groupement (1) de téléphériques n'est pas dépassée, le groupement (1) de téléphériques étant de préférence conçu selon l'une des revendications 14 à 17.
